# EUROPÄISCHE PATENTSCHRIFT

(11) **EP 3 431 203 B1**
(45) Veröffentlichungstag und Bekanntmachung des Hinweises auf die Patenterteilung: **18.03.2020**
(21) Anmeldenummer: 18183397.1
(22) Anmeldetag: 13.07.2018
(51) Int. Cl.: B21D 5/02, B21D 55/00

(54) **BIEGEPRESSE UND VERFAHREN ZUM BETRIEB EINER BIEGEPRESSE**
BENDING PRESS AND METHOD FOR OPERATING A BENDING PRESS
PRESSE À CINTRER ET PROCÉDÉ DE FONCTIONNEMENT D'UNE PRESSE À CINTRER

(30) Priorität: 17.07.2017 AT 505962017
(43) Veröffentlichungstag der Anmeldung: 23.01.2019
(73) Patentinhaber: TRUMPF Maschinen Austria GmbH & Co. KG., 4061 Pasching (AT)
(72) Erfinder: ANGERER, Gerhard, 4203 Altenberg (AT); FREUDENTHALER, Klemens, 4020 Linz (AT); HAUSMANN, Florian, 4050 Traun (AT); HÖRL, Matthias, 4020 Linz (AT); KOVJENIC, Nenad, 4040 Linz (AT); MAIER, Florian, 4060 Leonding (AT); STEININGER, Verena, 4020 Linz (AT); THEIS, Helmut, 4540 Pfarrkirchen (AT); WALDHERR, Manfred, 4040 Linz (AT)
(74) Vertreter: Burger, Hannes

(56) Entgegenhaltungen:
- EP-A1- 1 987 899
- WO-A1-2012/151600
- AT-A4- 516 146
- JP-A- 2006 061 959

## Beschreibung

Die Erfindung betrifft ein Verfahren zum Betrieb einer Biegepresse sowie eine Biegepresse gemäß dem Wortlaut der Patentansprüche.

Zur Verbesserung der Produktivität, beispielsweise zur Verkürzung von Zykluszeiten, wird heutzutage bei Biegepressen, auch Abkantpressen genannt, eine möglichst große Anzahl an Maschinenkomponenten automatisiert durch eine Steuerungsvorrichtung gesteuert, zum Beispiel verstell- bzw. verfahrbare Komponenten. Eine typische und hierzu häufig eingesetzte Steuerungsvorrichtung ist die sogenannte CNC-Steuerung.

Bei derartigen CNC-gesteuerten Prozessen werden Maschinenkomponenten beispielsweise entlang angetriebener Verfahr- bzw. Verstellachsen in vorbestimmbare bzw. vorprogrammierbare Positionen im jeweiligen Maschinenkoordinatensystem verstellt. Solche rechner- bzw. programmgesteuerte Verstellungen von Maschinenkomponenten bergen jedoch ein inhärentes Gefahrenpotential aufgrund der Automatisierung der ausgeführten Verfahr- bzw. Verstellbewegungen. Zum Beispiel besteht grundsätzlich die Gefahr von Kollisionen zwischen verstellbaren Maschinenkomponenten untereinander oder mit anderen Maschinenkomponenten oder auch mit Fremdobjekten. Solche Kollisionen können beispielsweise aufgrund programmtechnisch fehlerhafter Vorgabe von Soll- bzw. Anfahrpositionen, unsachgemäßer Bedienung bzw. bei Bedienungsfehlern, nicht vorgesehenen bzw. irrtümlich platzierten Hindernissen, etc. resultieren.

Bei teil- oder vollautomatisierten Biegeprozessen ist in erster Linie die Sicherheit von Bedienpersonal bzw. allgemein die Personensicherheit zu beachten. Insbesondere ist bei automatisiert ausgeführten Verstell- bzw. Verfahrbewegungen ein gewisses Risikopotential hinsichtlich einer Kollision einer verfahrenen bzw. verstellten Maschinenkomponente mit der Bedienperson bzw. einem Körperteil einer Person gegeben, beispielsweise auch aufgrund von Unachtsamkeit einer Bedienperson, oder bei Nichtbeachtung von arbeitstechnischen Sicherheitsvorgaben. In schlimmen Fällen können durch derartige Kollisionen schwere Verletzungen verursacht werden, insbesondere bei Maschinen mit schweren und von leistungsstarken Antriebsorganen angetriebenen Maschinenkomponenten. Aus Gründen der Personensicherheit ist es von Vorteil, bei solchen Biegepressen Sicherheitssysteme vorzusehen, welche im Falle einer Gefahr automatisiert Sicherheitsmaßnahmen, wie etwa einen Not-Stopp für eine verstellbare Maschinenkomponente durchführen können.

In der Vergangenheit wurden bereits Lösungen zur automatischen Überwachung von teil- oder vollautomatisierten Biegeumformungen vorgeschlagen. In der JP 2006061959 A ist beispielsweise eine Überwachung des Arbeitsbereiches einer Abkantpresse vorgeschlagen. Dieses Dokument offenbart ein Verfahren, bei welchem eine Laserlinie im Biegebereich der Presse auf eine flache Oberfläche eines bereits positionierten Werkstücks projiziert wird, und dieser Bereich mit einer Kamera überwacht wird. Dringt ein Objekt bzw. ein Hindernis, beispielsweise die Hand eine Person, in den Bereich zwischen der Linienlichtquelle und der Werkstückoberfläche ein, kann dieses Hindernis durch eine bildlich erfassbare Unterbrechung der auf das Werkstück projizierten Lichtlinie mittels der Kamera erkannt werden. Nach Erfassung bzw. Erkennung eines Hindernisses im Überwachungsbereich kann im gegebenen Fall ein Absenken eines Pressstempels der Abkantpresse umgehend gestoppt werden. Mit der offenbarten Methode ist jedoch nur ein sehr eingeschränkter Bereich überwachbar, insbesondere kann hiermit keine automatisierte Verstellbewegung einer Maschinenkomponente überwacht werden.

Häufig bei Biegepressen eingesetzte, verstell- bzw. verfahrbare Maschinenkomponenten sind sogenannte Anschlagvorrichtungen. Derartige Anschlagvorrichtungen werden primär zur präzisen Positionierung eines zu bearbeitenden Werkstücks in einer Bearbeitungsstellung verwendet. Üblicherweise weisen derartige Anschlagvorrichtungen einen oder mehrere verstell- bzw. verfahrbare Anschlagfinger mit Anschlagflächen und/oder Auflageflächen auf, an welchen Flächen ein Werkstück für die Positionierung an den Anschlagfinger angelegt und/oder auf den Anschlagfinger aufgelegt werden kann. Zur vorgesehenen Positionierung der Werkstücke werden derartige Anschlagfinger hierbei im ordnungsgemäßen Betrieb zuerst in eine bestimmte Anschlagposition verstellt. Anschließend kann ein zu bearbeitendes Werkstück automatisiert, aber auch manuell durch eine Bedienperson am Anschlagfinger positioniert werden. Bei Biegepressen sind solche Anschlagvorrichtungen häufig als sogenannte Hinteranschläge ausgeführt, wobei die Komponenten derartiger Hinteranschläge in einem Maschineninneren bzw. Maschineninnenraum verstellbar angeordnet sind. Solche Hinteranschläge bzw. deren Anschlagfinger können hierbei in einem sehr großen bzw. weiten Bereich verstellbar sein, um die Möglichkeiten zur Positionierung und Bearbeitung von Werkstücken zu maximieren.

Zur Vermeidung von Kollisionen eines solchen Anschlagfingers mit anderen Objekten im Zuge einer automatisiert gesteuerten Verfahrbewegung wurden in der Vergangenheit bereits Lösungen offenbart. Bei einer beispielhaften Lösung wird etwa vorgeschlagen, die Bewegungsgeschwindigkeit eines Anschlagfingers insbesondere bei Annäherung an die Anschlag- bzw. Sollposition stark zu reduzieren. Bei einer weiteren, beispielhaften Lösung ist vorgesehen, dass die Verstellbewegung bei Annäherung an die Anschlagposition antriebstechnisch kraftreduziert ausgeführt wird. Des Weiteren wurde in der Vergangenheit vorgeschlagen, eine automatisierte Verstellbewegung im Annäherungsbereich an die Anschlagposition zu stoppen, und die endgültige, angetriebene Verstellung des Anschlagfingers in die Anschlagposition erst nach bewusster Freigabe durch einen Bediener auszuführen.

Es existieren außerdem sensortechnische Lösungen um eine automatisierte Verstellung eines Anschlagfingers zu überwachen, zum Beispiel durch Leuchtmarkierungen wie in EP 1 987 899 A1, oder wie etwa eine Überwachung der Stromaufnahme eines Antriebsorgans für den Anschlagfinger. In der WO 2012/151600 ist zum Beispiel eine Sensoranordnung zur Überwachung einer automatisiert gesteuerten Annäherungsbewegung eines Anschlagfingers in eine Anschlagposition entlang einer angetriebenen CNC-Achse offenbart. Die Sensoranordnung kann hierbei ein am Anschlagfinger angebrachtes Sensorelement umfassen. Offenbart sind an dem Anschlagfinger selbst angebrachte mechanische Kontaktschalter, Kraftmesselemente oder auch kontaktlose Näherungssensoren. So kann etwa eine Kamera in Verbindung mit einem Objekt- bzw. Strukturerkennungssystem zur strukturellen Erkennung von bestimmten Objekten verwendet werden. Die bisher vorgeschlagenen Methoden und Sensorsysteme sind jedoch mit Nachteilen behaftet. Die vorbekannten Methoden weisen Nachteile wie etwa eine sehr späte Erfassung eines Hindernisses erst bei Kontakt, unpräzise Erkennung von Hindernissen oder einen zu limitierten Erfassungsbereich auf, oder erfordern für die Erkennung von Hindernissen einen erheblichen rechnerischen Aufwand. Letzteres kann wiederum problematisch hinsichtlich einer zur Erkennung eines Hindernisses benötigten Zeitdauer sein, und kann in weiterer Folge zu einer nachteiligen Verzögerung der Durchführung einer Sicherheitsmaßnahme führen.

Im technischen Bereich der Biegepressen besteht daher weiter Verbesserungsbedarf hinsichtlich Überwachung von automatisiert gesteuerten Verstellbewegungen von Anschlagfingern, insbesondere einer Verstellbewegung in eine Anschlagposition. Die Verstellbewegung eines Anschlagfingers in die Anschlagposition ist besonders risikobehaftet, da diese Verstellbewegung in einem Nahbereich eines Bearbeitungsbereiches durchgeführt wird.

Aufgabe der Erfindung war es, ein verbessertes Verfahren zum Betrieb einer Biegepresse, sowie eine entsprechende Biegepresse zur Verfügung zu stellen, mittels welcher eine Verstellbewegung eines Anschlagfingers in eine Anschlagposition mit hoher Erfassungssicherheit und Erfassungsrate für Hindernisse überwacht werden kann, und bei Erfassung eines Hindernisses zeitnah eine Sicherheitsmaßnahme eingeleitet werden kann.

Diese Aufgabe wird durch ein Verfahren zum Betrieb einer Biegepresse und einer Biegepresse gemäß den Ansprüchen gelöst.

Das Verfahren zum Betrieb einer Biegepresse umfasst ein automatisiert gesteuertes Verstellen eines Anschlagfingers einer Anschlagvorrichtung entlang zumindest einer ersten, horizontal verlaufenden Verstellachse in Richtung einer durch ein unteres Biegewerkzeug und ein relativ dazu verstellbares, oberes Biegewerkzeug definierten, vertikalen Biegeebene, in eine zum Positionieren eines Werkstücks vorgesehene Anschlagposition. Zum Verstellen des Anschlagfingers ist zumindest eine durch eine Steuerungsvorrichtung gesteuerte Antriebsanordnung vorgesehen. Der Anschlagfinger weist eine, der Biegeebene nächstgelegene, vorderste Anschlagfläche zum Positionieren eines Werkstücks für eine Biegeumformung auf.

Zumindest während einer automatisiert gesteuerten Verstellbewegung des Anschlagfingers entlang der ersten Verstellachse in die Anschlagposition wird mittels einer, entlang aller für den Anschlagfinger vorgesehenen, horizontalen Verstellachsen mit dem Anschlagfinger bewegungsgekoppelt an der Anschlagsvorrichtung angeordneten Bilderfassungsvorrichtung, ein in Verstellrichtung dem Anschlagfinger horizontal vorauseilender Überwachungsbereich zwischen der vordersten Anschlagfläche und der Biegeebene hinsichtlich Hindernisse überwacht.

Hierbei wird zur Erfassung von Hindernissen während der Verstellbewegung in die Anschlagposition mittels einer, entlang aller für den Anschlagfinger vorgesehenen, horizontalen Verstellachsen mit dem Anschlagfinger bewegungsgekoppelt an der Anschlagsvorrichtung und von der Bilderfassungsvorrichtung beabstandet angeordneten Beleuchtungsvorrichtung, ein erstes Lichtbündel in den der Anschlagfläche vorauseilenden Überwachungsbereich gestrahlt.

Bei Erfassung eines Hindernisses während der Verstellbewegung des Anschlagfingers entlang der ersten Verstellachse in die Anschlagposition wird automatisiert gesteuert eine Sicherheitsmaßnahme durchgeführt.

Durch diese Maßnahmen kann ein in erkennungs- und sicherheitstechnischer Hinsicht verbessertes Verfahren zum Betreiben einer Biegepresse bereitgestellt werden. Durch die angegebenen Maßnahmen können Hindernisse, beispielsweise eine menschliche Hand oder ein Finger, im Verstellrichtung des Anschlagfingers bei der besonders sicherheitsrelevanten Verstellbewegung des Anschlagfingers in eine Anschlagposition, erfassungssicher und mit hoher Erfassungsrate erfasst werden. Aufwendige und zeitverzögernde Rechenoperationen zur Objekterkennung sind nicht erforderlich. Durch die mit dem Anschlagfinger bewegungsgekoppelte Verstellung der Beleuchtungsvorrichtung und der Bilderfassungsvorrichtung kann sichergestellt werden, dass der sicherheitskritische, dem Anschlagfinger horizontal vorauseilende Überwachungsbereich während der Verstellbewegung fortwährend überwacht wird.

Des Weiteren können zykluszeitverzögernde Maßnahmen, wie etwa eine Verringerung der Verfahr- bzw. Verstellgeschwindigkeit bei Annäherung an die Anschlagposition oder eine kraftreduzierte Annäherung des Anschlagfingers erübrigt werden, ohne dass Kompromisse hinsichtlich der Sicherheit, im Besonderen hinsichtlich der Personensicherheit eingegangen werden müssen. Hierdurch kann die Bearbeitung der Werkstücke mit möglichst kurzen Zyklus- bzw. Taktzeiten, und damit einer möglichst hohen Produktivität durchgeführt werden. Des Weiteren kann durch die angegebenen Verfahrensmaßnahmen eine Kollision des Anschlagfingers hinsichtlich Kraftwirkung nicht nur abgeschwächt, sondern kann eine Kollision, etwa mit einem Körperteil eines unachtsamen Bedieners, gänzlich verhindert werden.

Bei Erfassung eines Hindernisses in Verstellrichtung kann als Sicherheitsmaßnahme beispielsweise ein unverzügliches Stoppen der Verstellbewegung des Anschlagfingers oder eine Rückstellbewegung des Anschlagfingers in Gegenrichtung ausgelöst werden, oder sogar eine umgehende Stillsetzung der gesamten Biegepresse durchgeführt werden. Zusätzlich kann zum Beispiel ein Warnsignal bzw. Alarm ausgelöst werden.

Das von der Beleuchtungsvorrichtung abgestrahlte, erste Lichtbündel kann im Prinzip jedwede Querschnittsform aufweisen, beispielsweise durch einen Lichtkegel, Lichtzylinder oder eine andere Lichtbündelstruktur gebildet sein. Auf einer Objektoberfläche, zum Beispiel eines Hindernisses werden entsprechend geometrisch geformte, erste Lichtabbildungen durch das erste Lichtbündel projiziert. Bestimmte Querschnittsformen des ersten Lichtbündels können jedoch besonders vorteilhaft sein, wie dies nachstehend noch näher erläutert wird.

Grundsätzlich kann die Beleuchtungsvorrichtung zur Erzeugung des ersten Lichtbündels beliebige Lichtquellen umfassen, wobei wiederum bestimmte Lichtquellen besonders vorteilhaft sein können. Wesentlich ist hierbei, dass eine erste Lichtabbildung auf einer Oberfläche möglichst rasch und erkennungssicher durch die Bilderfassungsvorrichtung erfasst werden kann. Zum Beispiel kann das von der Beleuchtungsvorrichtung abgestrahlte Licht im Wesentlichen monochromatisch sein, und kann die Bilderfassungsvorrichtung spezifisch auf die Erfassung der Wellenlänge des von der Beleuchtungsvorrichtung abgestrahlten Lichts abgestimmt bzw. optimiert sein.

Im Besonderen kann vorzugsweise vorgesehen sein, dass das erste Lichtbündel mittels einer, entlang aller für den Anschlagfinger vorgesehenen Verstellachsen mit dem Anschlagfinger bewegungsgekoppelt an der Anschlagsvorrichtung angeordneten Beleuchtungsvorrichtung in den der Anschlagfläche vorauseilenden Überwachungsbereich gestrahlt wird. Diese Ausführungsform des Verfahrens ist insbesondere dann von Vorteil, wenn eine Verstellbewegung entlang der ersten, horizontalen Verstellachse in eine Anschlagposition gekoppelt bzw. gleichzeitig mit Verstellbewegungen entlang anderer Verstellachsen durchgeführt wird. Dies, da auf diese Weise sichergestellt werden kann, dass das erste Lichtbündel immer in den besonders sicherheitskritischen Bereich zwischen der vordersten Anschlagfläche und der Biegeebene gestrahlt wird.

Ebenso kann es ganz grundsätzlich von Vorteil sein, dass der in Verstellrichtung dem Anschlagfinger horizontal vorauseilende Überwachungsbereich mittels einer, entlang aller für den Anschlagfinger vorgesehenen Verstellachsen mit dem Anschlagfinger bewegungsgekoppelt an der Anschlagsvorrichtung angeordneten Bilderfassungsvorrichtung überwacht wird. Hierdurch kann im Speziellen sichergestellt werden, dass der Überwachungsbereich während aller Verstellbewegungen des Anschlagfingers sicherheitskritische Bereiche abdeckt.

Ganz grundsätzlich kann es außerdem zweckmäßig sein, wenn während der Verstellbewegung in die Anschlagposition die Bilderfassungsvorrichtung und die Beleuchtungsvorrichtung der vordersten Anschlagfläche des Anschlagfingers in Verstellrichtung nacheilend an der Anschlagvorrichtung angeordnet sind. Dies unter anderem deshalb, da so die Bilderfassungsvorrichtung und die Beleuchtungsvorrichtung gesichert in einem Maschineninnenraum der Biegepresse angeordnet werden können. Außerdem ist hierdurch eine erfassungssichere Detektion von Hindernissen gewährleistet.

Bei einer Verfahrensvariante kann vorgesehen sein, dass bei einer Erfassung einer durch das erste Lichtbündel auf einer Objektoberfläche eines Hindernisses projizierten, ersten Lichtabbildung die Sicherheitsmaßnahme durchgeführt wird, wobei die Beleuchtungsvorrichtung und die Bilderfassungsvorrichtung derart an der Anschlagvorrichtung ausgerichtet angeordnet werden, dass bei ordnungsgemäßen Betriebszuständen zumindest während der Verstellbewegung des Anschlagfingers in die Anschlagsposition durch das erste Lichtbündel keine erste Lichtabbildung auf eine Oberfläche einer Komponente der Biegepresse projiziert wird oder keine erste Lichtabbildung auf einer Oberfläche einer Komponente der Biegepresse durch die Bilderfassungsvorrichtung erfassbar ist.

Auf diese Weise kann die Durchführung der Sicherheitsmaßnahme alleinig basierend auf eine Detektion einer ersten Lichtabbildung erfolgen. Dies erlaubt eine zuverlässige Erfassung von Hindernissen mit besonders hoher Erfassungsrate.

Es kann aber auch vorgesehen sein, dass während der Verstellbewegung des Anschlagfingers in die Anschlagposition erfasste Bilddaten fortwährend mit hinterlegten Referenzdaten, welche einen Verlauf von Bilddaten bei ordnungsgemäßen Betriebszuständen während der Verstellbewegung in die Anschlagsposition kennzeichnen, abgeglichen werden, und dass bei einer Erfassung einer verlaufstechnisch atypisch auftretenden, ersten Lichtabbildung auf einer Objektoberfläche eines Hindernisses die Sicherheitsmaßnahme durchgeführt wird.

Eine solche Verfahrensführung weist eine hohe Flexibilität auf. Bei dieser Verfahrensführung muss im Besonderen keine Rücksicht auf eine Vermeidung von im Verlauf einer ordnungsgemäßen Verstellbewegung in die Anschlagposition auf Oberflächen von Maschinenkomponenten projizierte, erste Lichtabbildungen genommen werden. Daher ist diese Verfahrensführung für eine hohe Anzahl an Maschinentypen einsetzbar, und müssen bei der Anordnung und Ausrichtung der Beleuchtungsvorrichtung und der Bilderfassungsvorrichtung keine Kompromisse hinsichtlich allenfalls im Zuge der Verstellbewegung in die Anschlagposition hervorgerufene, erste Lichtabbildungen eingegangen werden.

Bei einer bevorzugten Weiterbildung des Verfahrens kann vorgesehen sein, dass das erste Lichtbündel als divergentes oder weitestgehend paralleles Lichtbündel, dessen Strahlengang eine erste Lichtebene bildet, in den der vordersten Anschlagfläche horizontal vorauseilenden Überwachungsbereich gestrahlt wird, wobei eine normal zum Strahlengang verlaufende Lichtbündelquerachse der ersten Lichtebene zumindest weitestgehend parallel zu der vordersten Anschlagfläche des Anschlagfingers ausgerichtet wird.

Hierdurch kann ein räumlich begrenztes, erstes Lichtbündel in den der vordersten Anschlagfläche des Anschlagfingers horizontal vorauseilenden Überwachungsbereich gestrahlt werden. Als Lichtquelle kann in einem solchen Fall beispielsweise ein Linienlaser zum Einsatz kommen. Von Vorteil ist hierbei unter anderem, dass eine ungewollte Projektion einer ersten Lichtabbildung auf eine Oberfläche einer Maschinenkomponente im Bereich der Maschine durch das erste Lichtbündel mit höherer Wahrscheinlichkeit vermieden werden kann. Die geometrische Form einer ersten Lichtabbildung auf einer flachen Oberfläche ist durch einen Lichtstreifen bzw. eine Lichtlinie gegeben. Dies eröffnet Möglichkeiten hinsichtlich einer bildlichen Auswertung bzw. Analyse von erfassten, ersten Lichtabbildungen, welche von dieser Linienform abweichen.

So kann in weiterer Folge zweckmäßig sein, dass während der Verstellbewegung des Anschlagfingers in die Anschlagposition erfasste Bilddaten mittels einer Bildauswertungsvorrichtung hinsichtlich einer abbildungstechnisch erfassten Geometrie von ersten Lichtabbildungen ausgewertet werden, und dass bei Erfassung einer nichtlinearen, ersten Lichtabbildung, insbesondere bei Detektion einer gekrümmten, ersten Lichtabbildung die Sicherheitsmaßnahme durchgeführt wird.

Auf diese Weise kann eine weitere, sehr flexibel einsetzbare Verfahrensführung bereitgestellt werden. Im Besonderen können so glatte bzw. ebene Oberflächen, beispielsweise von Maschinenkomponenten, von abgerundeten Objektoberflächen, wie zum Beispiel einem Finger oder einer Hand einer Person unterschieden werden, und kann erst dann eine Sicherheitsmaßnahme automatisiert durchgeführt werden, wenn eine erste Lichtabbildung mit nichtlinearem Verlauf, insbesondere gekrümmten bzw. abgerundeten Verlauf erfasst bzw. erkennungstechnisch ausgewertet wird.

Es kann aber auch vorgesehen sein, dass das erste Lichtbündel derart in den der vordersten Anschlagfläche in Verstellrichtung horizontal vorauseilenden Überwachungsbereich gestrahlt wird, dass eine parallel zur Lichtbündelquerachse verlaufende Breitenerstreckung der ersten Lichtebene in dem Überwachungsbereich größer gewählt wird als eine Horizontalerstreckung der vordersten Anschlagfläche des Anschlagfingers.

Durch diese Maßnahme können auch Hindernisse seitlich bezüglich der Verstellrichtung des Anschlagfingers mittels der Bilderfassungsvorrichtung erfasst werden. Dies ist zum Beispiel vorteilhaft zur Erfassung eines unsachgemäßen bzw. nicht ordnungsgemäßen Eingreifens einer Bedienperson von einer bezüglich der Verstellrichtung des Anschlagfingers seitlichen Eingriffsseite. Beispielsweise kann vorgesehen sein, dass die parallel zur Lichtbündelquerachse verlaufende Breitenerstreckung der ersten Lichtebene im Bereich des Anschlagfingers in etwa doppelt so groß gewählt wird, wie die Horizontalerstreckung der vordersten Anschlagfläche des Anschlagfingers.

Vorzugsweise kann bei einer Weiterbildung vorgesehen sein, dass mittels der Beleuchtungsvorrichtung zumindest während der Verstellbewegung in die Anschlagposition permanent eine zweite Lichtabbildung, insbesondere ein zumindest weitestgehend parallel zu der vordersten Anschlagfläche ausgerichteter Lichtstreifen auf eine mittels der Bilderfassungsvorrichtung erfassbare Oberfläche des Anschlagfingers, projiziert wird.

Diese Maßnahme bringt den Vorteil, dass dadurch bei ordnungsgemäßer Funktion der Bilderfassungsvorrichtung und der Beleuchtungsvorrichtung und bei aktivierter Beleuchtungsvorrichtung, eine fortwährend für die Beleuchtungsvorrichtung erfassbare, zweite Lichtabbildung auf eine Oberfläche des Anschlagfingers projiziert wird. Dadurch ist eine sicherheitsrelevante Maßnahme zur Funktionsüberprüfung der Beleuchtungsvorrichtung und der Bilderfassungsvorrichtung bereitgestellt. Die zweite Lichtabbildung kann hierbei durch ein zweites, auf die Oberfläche des Anschlagfingers gestrahltes Lichtbündel erzeugt werden. Die zweite Lichtabbildung kann abhängig von der Anordnung der Beleuchtungsvorrichtung auf eine Oberfläche des Anschlagfingers projiziert werden, welche Oberfläche innerhalb des Überwachungsbereiches der Bilderfassungsvorrichtung liegt. Beispielsweise kann vorgesehen sein, dass die zweite Lichtabbildung auf einen in Richtung einer Werkstückzufuhrseite der Biegepresse weisenden, vorderen Bereich einer unteren Oberfläche des Anschlagfingers projiziert wird.

In weiterer Folge kann für den Fall, dass im Betrieb der Biegepresse die zweite Lichtabbildung nicht erfasst wird, umgehend eine Sicherheitsmaßnahme eingeleitet werden. Eine Maßnahme kann zumindest ein automatisiertes Auslösen eines Alarmes umfassen. In weiterer Folge ist es auch denkbar, dass die Biegepresse oder zumindest der betroffene Anschlagfinger stillgesetzt oder in einen sicheren Zustand versetzt bzw. verstellt werden. Anschließend können Instandsetzungsmaßnahmen bzw. Reparaturmaßnahmen zur Behebung einer Funktionsstörung durchgeführt werden.

Bei einer Weiterbildung des Verfahrens kann vorgesehen sein, dass das erste Lichtbündel und/oder die Überwachung bei Erreichen einer steuerungstechnisch vorgegebenen Anschlagposition umgehend deaktiviert wird oder werden.

Durch beide, angegeben Varianten kann eine Überwachung des potentiellen Eingriffsbereiches vor dem Anschlagfinger, also der der vordersten Anschlagfläche des Anschlagfingers zugewandte Bereich aktiviert bzw. deaktiviert werden. Zum Beispiel wird im Falle eines deaktivierten, ersten Lichtbündels keine erste Lichtabbildung auf eine Oberfläche bzw. Objektoberfläche projiziert, und kann die Bilderfassungsvorrichtung daher auch keine erste Lichtabbildung erfassen. Auf diese Weise kann ein ungewolltes Auslösen von Sicherheitsmaßnahmen wirksam hintangehalten werden. Zum Beispiel kann hintangehalten werden, dass im Falle eines Eindringens einer Hand einer Bedienperson in den Strahlengang des ersten Lichtbündels, beispielsweise um ein Werkstück manuell an einer Anschlagfläche des Anschlagfingers zu positionieren, die erste Lichtabbildung erfasst und eine Sicherheitsmaßnahme ausgelöst wird. Die angegebene Maßnahme stellt hierbei kein Sicherheitsrisiko dar, da keine Kollisionsgefahr durch eine Verstellbewegung besteht, solange sich der Anschlagfinger in der Anschlagposition befindet.

Des Weiteren kann vorgesehen sein, dass das erste Lichtbündel und/oder die Überwachung bei einem steuerungstechnisch vorgegebenen Stillstand des Anschlagfingers deaktiviert wird oder werden. Je nach Konfiguration der Biegepresse und/oder je nach Ablauf einer Bearbeitung eines Werkstückes, kann es hierbei sinnvoll sein, wenn das erste Lichtbündel und/oder die Überwachung auch bei Verstellbewegungen entlang anderer Verstellachsen, als der ersten Verstellachse, aktiviert wird oder werden. Es kann aber auch zweckmäßig sein, wenn das erste Lichtbündel und/oder die Überwachung bei Verstellbewegungen entlang anderer Verstellachsen, als der ersten Verstellachse, deaktiviert wird oder werden.

Schließlich kann auch vorgesehen sein, dass das erste Lichtbündel und/oder die Überwachung bei einem automatisiert gesteuerten Start der Verstellbewegung des Anschlagfingers in die Anschlagposition umgehend aktiviert wird oder werden.

Dadurch kann sichergestellt werden, dass die Überwachung der Verstellbewegung entlang der ersten, horizontalen Verstellachse in die Anschlagposition umgehend aktiviert wird, und eine erhöhte Betriebs-, insbesondere Personensicherheit bereitgestellt werden kann.

Die Aufgabe der Erfindung wird auch dadurch gelöst, dass eine Biegepresse bereitgestellt wird.

Die Biegepresse umfasst ein unteres Biegewerkzeug und ein relativ dazu verstellbares, oberes Biegewerkzeug, durch welche Biegewerkzeuge eine vertikale Biegeebene für Biegeumformungen von Werkstücken definiert ist.

Des Weiteren umfasst die Biegepresse eine Anschlagvorrichtung mit einem entlang zumindest einer ersten, horizontalen Verstellachse in eine Anschlagposition verstellbaren Anschlagfinger, welcher Anschlagfinger wenigstens eine zum Positionieren eines zu bearbeitenden Werkstücks in der Anschlagposition vorgesehene, der Biegeebene () nächstliegende, vorderste Anschlagfläche aufweist.

Hierbei umfasst die Anschlagvorrichtung zumindest eine mit einer Steuerungsvorrichtung signalverbundene Antriebsanordnung zur automatisierten Steuerung von Verstellbewegungen des Anschlagfingers.

An der Anschlagvorrichtung ist eine entlang aller für den Anschlagfinger vorgesehenen, horizontalen Verstellachsen bewegungsgekoppelt mit dem Anschlagfinger verstellbare Bilderfassungsvorrichtung angeordnet. Diese Bilderfassungsvorrichtung ist zumindest zur Überwachung eines, während einer Verstellbewegung des Anschlagfingers entlang der ersten Verstellachse in die Anschlagposition, der vordersten Anschlagfläche horizontal vorauseilenden Überwachungsbereich zwischen der vordersten Anschlagfläche und der Biegeebene ausgerichtet.

Des Weiteren ist beabstandet von der Bilderfassungsvorrichtung an der Anschlagvorrichtung eine entlang aller für den Anschlagfinger vorgesehenen, horizontalen Verstellachsen mit dem Anschlagfinger bewegungsgekoppelt verstellbare Beleuchtungsvorrichtung angeordnet. Diese Beleuchtungsvorrichtung ist zur Abstrahlung eines ersten Lichtbündels in den, während der Verstellbewegung in die Anschlagposition, der vordersten Anschlagfläche horizontal vorauseilenden Überwachungsbereich ausgerichtet.

Die Beleuchtungsvorrichtung und die Bilderfassungsvorrichtung sind mit der Steuerungsvorrichtung oder einer Sicherheitssteuerung signalverbunden. Hierbei ist die Steuerungsvorrichtung oder die Sicherheitssteuerung bei Erfassung eines Hindernisses während der Verstellbewegung des Anschlagfingers entlang der ersten Verstellachse in die Anschlagposition, zur Durchführung einer Sicherheitsmaßnahme ausgebildet.

Durch diese technischen Merkmale kann eine sicherheitstechnisch verbesserte Biegepresse zur Verfügung gestellt werden. Im Speziellen können Hindernisse während einer besonders sicherheitsrelevanten Verstellbewegung des Anschlagfingers in eine Anschlagposition erkennungssicher und mit hoher Erfassungsrate erfasst werden. Durch die angegebenen Merkmale kann die Biegepresse hochproduktiv mit geringen Zykluszeiten betrieben werden, da etwa eine sicherheitstechnisch sonst erforderliche Reduktion der Verstellgeschwindigkeit eines Anschlagfingers während der Verstellbewegung in die Anschlagposition erübrigt werden kann. Insbesondere kann bei einer Biegepresse mit den angeführten Merkmalen, eine Kollision des Anschlagfingers hinsichtlich Kraftwirkung nicht nur abgeschwächt, sondern kann eine Kollision gänzlich verhindert werden. Durch die mit dem Anschlagfinger bewegungsgekoppelte Verstellung der Beleuchtungsvorrichtung und der Bilderfassungsvorrichtung kann sichergestellt werden, dass der sicherheitskritische, dem Anschlagfinger horizontal vorauseilende Bereich während der Verstellbewegung durchgehend und ohne Einschränkungen überwacht wird.

Bei einer bevorzugten Ausführungsform der Biegepresse kann vorgesehen sein, dass die Beleuchtungsvorrichtung entlang aller für den Anschlagfinger vorgesehenen Verstellachsen mit dem Anschlagfinger bewegungsgekoppelt verstellbar an der Anschlagvorrichtung angeordnet ist.

Hierdurch kann sichergestellt werden, dass das erste Lichtbündel immer in den besonders sicherheitskritischen Bereich zwischen der vordersten Anschlagfläche und der Biegeebene gestrahlt wird.

Bei einer weiteren Ausführungsform kann vorgesehen sein, dass die Bilderfassungsvorrichtung entlang aller für den Anschlagfinger vorgesehenen Verstellachsen mit dem Anschlagfinger bewegungsgekoppelt verstellbar an der Anschlagvorrichtung angeordnet ist.

Auf diese Weise kann sichergestellt werden, dass der Überwachungsbereich während aller Verstellbewegungen des Anschlagfingers sicherheitskritische Bereiche abdeckt.

Ganz grundsätzlich kann es zweckmäßig sein, wenn die Bilderfassungsvorrichtung und die Beleuchtungsvorrichtung derart an der Anschlagvorrichtung angeordnet sind, dass die Bilderfassungsvorrichtung und die Beleuchtungsvorrichtung der vordersten Anschlagfläche des Anschlagfingers während der Verstellbewegung in die Anschlagposition in Verstellrichtung nacheilen. Dies unter anderem deshalb, da so die Bilderfassungsvorrichtung und die Beleuchtungsvorrichtung gesichert in einem Maschineninnenraum der Biegepresse angeordnet werden können. Außerdem ist hierdurch eine erfassungssichere Detektion von Hindernissen gewährleistet. Außerdem kann es sinnvoll sein, wenn die Beleuchtungsvorrichtung und die Bilderfassungsvorrichtung unterhalb des Anschlagfingers an der Anschlagvorrichtung angeordnet sind, beispielsweise an einer Konsole oder Fingerträger für den Anschlagfinger. Es ist im Prinzip aber auch möglich, dass die Beleuchtungsvorrichtung und/oder die Bilderfassungsvorrichtung über Befestigungsstreben oder Dergleichen direkt mit dem Anschlagfinger gekoppelt bzw. mit dem Anschlagfinger verbunden sind.

Die Steuerungsvorrichtung oder eine Sicherheitssteuerung kann beispielsweise im Betrieb der Biegepresse bei Erfassung eines Hindernisses zur Auslösung eines Not-Stopps des Anschlagfingers, oder eines Rückstellens des Anschlagfingers weg von der Anschlagposition ausgebildet sein. Grundsätzlich kann die Steuerungsvorrichtung oder eine Sicherheitssteuerung auch zur umgehenden Stillsetzung der Biegepresse und beispielsweise zusätzlich zur Auslösung eines Alarms ausgebildet sein.

Grundsätzlich kann die Beleuchtungsvorrichtung zur Erzeugung des ersten Lichtbündels beliebige Lichtquellen umfassen, wobei bestimmte Lichtquellen besonders vorteilhaft sein können. Wesentlich ist hierbei, dass eine erste Lichtabbildung auf einer Oberfläche möglichst rasch und erkennungssicher durch die Bilderfassungsvorrichtung erfasst werden kann. Zum Beispiel kann das von der Beleuchtungsvorrichtung abgestrahlte Licht im Wesentlichen monochromatisch sein, und kann die Bilderfassungsvorrichtung spezifisch auf die Erfassung der Wellenlänge des von der Beleuchtungsvorrichtung abgestrahlten Lichts abgestimmt bzw. optimiert sein.

Das von der Beleuchtungsvorrichtung abgestrahlte, erste Lichtbündel kann im Prinzip jedwede Querschnittsform aufweisen, beispielsweise durch einen Lichtkegel, Lichtzylinder oder eine andere Lichtbündelstruktur gebildet sein. Auf einer Oberfläche eines Objektes werden entsprechend geometrisch geformte, erste Lichtabbildungen durch das erste Lichtbündel projiziert. Bestimmte Querschnittsformen des ersten Lichtbündels können jedoch besonders vorteilhaft sein, wie dies nachstehend noch näher erläutert wird.

Im Besonderen kann vorgesehen sein, dass die Beleuchtungsvorrichtung entlang aller für den Anschlagfinger vorgesehenen Verstellachsen mit dem Anschlagfinger bewegungsgekoppelt verstellbar an der Anschlagvorrichtung angeordnet ist. Dies ist insbesondere dann von Vorteil, wenn eine Verstellbewegung entlang der ersten, horizontalen Verstellachse in eine Anschlagposition gekoppelt bzw. gleichzeitig mit Verstellbewegungen entlang anderer Verstellachsen durchgeführt wird. Dies, da auf diese Weise sichergestellt werden kann, dass das erste Lichtbündel immer in den sicherheitskritischen Überwachungsbereich zwischen der vordersten Anschlagfläche und der Biegeebene gestrahlt wird.

Bei einer Ausgestaltungsvariante der Biegepresse kann vorgesehen sein, dass die Beleuchtungsvorrichtung und die Bilderfassungsvorrichtung derart an der Anschlagvorrichtung ausgerichtet angeordnet sind, dass bei ordnungsgemäßen Betriebszuständen zumindest während der Verstellbewegung des Anschlagfingers in die Anschlagsposition durch das erste Lichtbündel keine erste Lichtabbildung auf einer Oberfläche einer Komponente der Biegepresse projiziert wird oder keine erste Lichtabbildung auf einer Oberfläche einer Komponente der Biegepresse durch die Bilderfassungsvorrichtung erfassbar ist.

Hierdurch kann im Betrieb der Biegepresse während der Verstellbewegung des Anschlagfingers in die Anschlagposition ein Hindernis durch bloße Erfassung einer durch das erste Lichtbündel auf einer Objektoberfläche des Hindernisses projizierten, ersten Lichtabbildung erfasst werden.

Es sind grundsätzlich aber auch Anordnungen der Beleuchtungsvorrichtung und der Bilderfassungsvorrichtung möglich, bei welchen bei ordnungsgemäßem Betrieb während der Verstellbewegung in die Anschlagposition doch eine erste Lichtabbildung auf eine Objektoberfläche projiziert wird. In solchen Fällen muss der Betrieb der Biegepresse derart durchgeführt werden, dass keine unnötigen bzw. unerwünschten Sicherheitsmaßnahmen ausgelöst werden. Beispiele für entsprechende Verfahrensführungen sind obenstehend und untenstehend beschrieben.

Bei einer Weiterbildung der Biegepresse kann vorgesehen sein, dass die Beleuchtungsvorrichtung einen Linienlaser umfasst, welcher derart an der Anschlagvorrichtung angeordnet ist, dass ein divergentes oder weitestgehend paralleles, erstes Lichtbündel, dessen Strahlengang eine erste Lichtebene bildet, in den, während der Verstellbewegung entlang der ersten Verstellachse in die Anschlagposition, der vordersten Anschlagfläche horizontal vorauseilenden Überwachungsbereich strahlbar ist, wobei eine normal zum Strahlengang verlaufende Lichtbündelquerachse der ersten Lichtebene zumindest weitestgehend parallel zu der vordersten Anschlagfläche des Anschlagfingers ausgerichtet ist.

Hierdurch kann eine, zumindest vorwiegend monochromatische Lichtquelle mit hoher Lichtintensität zur Erzeugung des ersten Lichtbündels bereitgestellt werden, sodass die Erfassungssicherheit einer ersten Lichtabbildung im Betrieb der Biegepresse gesteigert werden kann. Das erste Lichtbündel kann bei dieser Ausführungsform in einer Ebene abgestrahlt werden, wodurch ein räumlich begrenztes, erstes Lichtbündel in den dem Anschlagfinger horizontal vorauseilenden Überwachungsbereich gestrahlt werden kann. Im Betrieb der Biegepresse kann hierdurch das erste Lichtbündel primär in Richtung der Verstellbewegung des Anschlagfingers in die Anschlagposition räumlich begrenzt werden. Dennoch kann ein Hindernis in Verstellrichtung durch Erfassen der ersten Lichtabbildung auf einer Objektoberfläche des Hindernisses sicher und rasch erfasst werden. Die geometrische Form einer ersten Lichtabbildung auf einer flachen Oberfläche ist in diesem Fall durch einen Lichtstreifen bzw. eine Lichtlinie gegeben. Dies eröffnet Möglichkeiten hinsichtlich einer bildlichen Auswertung bzw. Analyse von erfassten, ersten Lichtabbildungen, welche von dieser Linienform abweichen.

So kann vorgesehen sein, dass der Linienlaser und die Bilderfassungsvorrichtung eine Lichtschnittsensoranordnung bilden.

Für den Betrieb der Biegepresse kann auf diese Weise ein Mittel zur Erkennung von nicht glatten Objektoberflächen bereitgestellt werden. Im Speziellen können glatte bzw. ebene Oberflächen, beispielsweise von Maschinenkomponenten, von abgerundeten Objektoberflächen von Hindernissen, wie zum Beispiel einem Finger oder einer Hand einer Person unterschieden werden. In weiterer Folge kann zum Beispiel erst dann eine Sicherheitsmaßnahme automatisiert durchgeführt werden, wenn eine erste Lichtabbildung mit nichtlinearem Verlauf, insbesondere mit gekrümmten bzw. abgerundeten Verlauf erfasst bzw. erkennungstechnisch ausgewertet wird.

Zweckmäßig kann auch eine Ausgestaltungsform sein, bei welcher der Linienlaser derart konfiguriert und angeordnet ist, dass eine parallel zu der Lichtbündelquerachse verlaufende Breitenerstreckung der ersten Lichtebene des ersten Lichtbündels in dem Überwachungsbereich größer ist als eine Horizontalerstreckung der vordersten Anschlagfläche des Anschlagfingers.

Durch dieses Merkmal können im Betrieb der Biegepresse auch Hindernisse seitlich bezüglich der Verstellrichtung des Anschlagfingers mittels der Bilderfassungsvorrichtung erfasst werden. Beispielsweise kann der Linienlaser derart konfiguriert und angeordnet sein, dass die Breitenerstreckung der ersten Lichtebene des ersten Lichtbündels in dem Überwachungsbereich in etwa doppelt so groß ist, als die Horizontalerstreckung der vordersten Anschlagfläche des Anschlagfingers.

Schließlich kann vorgesehen sein, der Linienlaser zur Projektion eines parallel zu der vordersten Anschlagfläche des Anschlagfingers verlaufenden, zweiten Lichtstreifens auf eine Oberfläche des Anschlagfingers konfiguriert und angeordnet ist.

Von Vorteil ist hierbei, dass im ordnungsgemäßen Betrieb der Biegepresse, eine für die Beleuchtungsvorrichtung fortwährend erfassbare, zweite Lichtabbildung auf eine Oberfläche des Anschlagfingers projiziert werden kann. Dadurch ist ein sicherheitsrelevantes Merkmal zur Funktionsüberprüfung der Beleuchtungsvorrichtung und der wenigstens Bilderfassungsvorrichtung bereitgestellt. Die zweite Lichtabbildung kann hierbei durch ein zweites, auf die Oberfläche des Anschlagfingers gestrahltes Lichtbündel erzeugt werden. Hierzu kann die Beleuchtungsvorrichtung eine zweite Lichtquelle umfassen. Im Speziellen kann die Beleuchtungsvorrichtung einen weiteren Linienlaser oder einen 2-Linienlaser zur Projektion eines Lichtstreifens auf eine Oberfläche des Anschlagfingers umfassen. Die Beleuchtungsvorrichtung kann hierbei derart angeordnet und ausgerichtet sein, dass die zweite Lichtabbildung auf eine Oberfläche des Anschlagfingers projiziert wird, welche Oberfläche innerhalb eines Erfassungsbereiches der Bilderfassungsvorrichtung liegt. Beispielsweise kann vorgesehen sein, dass die zweite Lichtabbildung auf eine untere Oberfläche im Bereich der vordersten Anschlagfläche projiziert wird.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel für eine Biegepresse mit Anschlagvorrichtung und Anschlagfingern, in perspektivischer Ansicht;
- Fig. 2: eine Seitenansicht eines Ausführungsbeispiels für eine Biegepresse mit Darstellung des Verfahrens im Betrieb der Biegepresse;
- Fig. 3: ausschnittsweise ein Erfassungsbereich einer Bilderfassungsvorrichtung der Anschlagvorrichtung, in Ansicht von unten;
- Fig. 4: eine Darstellung eines mittels einer Bilderfassungsvorrichtung erfassten Bildes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Im Folgenden werden eine Biegepresse, sowie ein Verfahren zum Betrieb einer Biegepresse anhand eines Ausführungsbeispiels beschrieben. An dieser Stelle sei vermerkt, dass die nachfolgenden Angaben selbstverständlich auch auf anders ausgestaltete Biegepressen, bei welchen automatisiert gesteuerte Anschlagvorrichtungen mit Anschlagfingern zur Positionierung von Werkstücken eingesetzt werden, übertragbar sind.

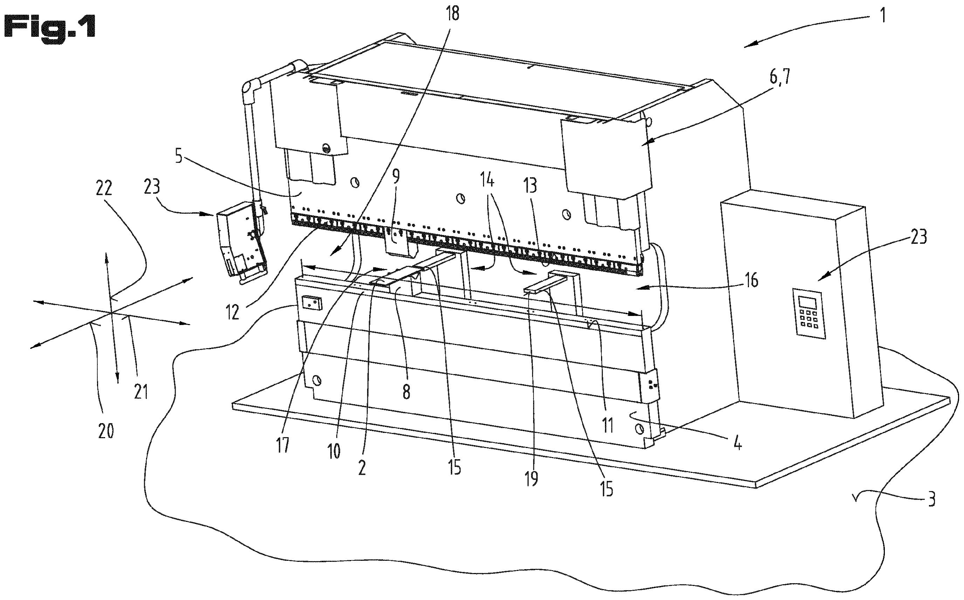

In der Fig. 1 ist ein Ausführungsbeispiel für eine Biegepresse 1 bzw. Abkantpresse dargestellt. Die Biegepresse 1 ist zum Bearbeiten, insbesondere zum Biegen eines Werkstücks 2 vorgesehen. Die Biegepresse 1 weist einen senkrecht zu einer Aufstandsfläche 3 ausgerichteten Tischbalken 4 auf. Zur Bearbeitung von Werkstücken 2 umfasst die Biegepresse 1 bzw. Abkantpresse 1 einen Pressbalken 5, welcher relativ zum Tischbalken 4 in vertikaler Richtung mittels Antriebsmittel 6, beispielsweise Hydraulikzylinder 7, verstellbar bzw. verfahrbar ist.

Zur Bearbeitung bzw. Biegeumformung eines Werkstücks 2 kann bei der Biegepresse 1 ein unteres Biegewerkzeug 8 und ein oberes Biegewerkzeug 9 vorgesehen sein, wobei das obere Biegewerkzeug 9 relativ zu dem unteren Biegewerkzeug 8 in vertikaler Richtung verstellbar sein kann. Im Betrieb der Biegepresse 1 kann vorgesehen sein, dass ein Werkstück 2 mittels dem unteren Biegewerkzeug 8 und dem oberen Biegewerkzeug 9 umgeformt bzw. gebogen wird. Bei dem in der Fig. 1 dargestellten Ausführungsbeispiel ist ein unteres Biegewerkzeug 8 bzw. Biegegesenk in einer unteren Werkzeugaufnahme 10 an einer Stirnfläche 11 des Tischbalkens 4 angeordnet. Ein oberes Biegewerkzeug 9 bzw. Biegestempel kann in einer oberen Werkzeugaufnahme 12 an einer Stirnfläche 13 des Pressbalkens 5 angeordnet sein.

Die Biegewerkzeuge 8, 9 können auswechselbar in den Werkzeugaufnahmen 10, 12 angeordnet bzw. gehalten sein, sodass für eine jeweilige Bearbeitung bzw. Umformung eines Werkstücks 2 jeweils geeignete Biegewerkzeuge 8, 9 gewählt bzw. verwendet werden können. Üblicherweise sind im Betrieb der Biegepresse 1 jeweils mehrere untere Biegewerkzeuge 8 und obere Biegewerkzeuge 9 in den Werkzeugaufnahmen 10, 12 angeordnet sind. Dies um in möglichst kurzen Zykluszeiten mittels der Biegepresse 1 in mehreren, aufeinanderfolgenden Arbeitsschritten an einem Werkstück 2 mehrere, unterschiedliche Biegeumformungen vornehmen zu können. Aus Gründen der Übersichtlichkeit sind in dem Ausführungsbeispiel gemäß der Fig. 1 jeweils nur ein unteres Biegewerkzeug 8 und ein oberes Biegewerkzeug 9 dargestellt.

Die in der Fig. 1 beispielhaft dargestellte Biegepresse 1 umfasst des Weiteren eine Anschlagvorrichtung 14 mit zumindest einem Anschlagfinger 15. Bei dem dargestellten Ausführungsbeispiel sind rein beispielshaft zwei Anschlagvorrichtungen 14 mit jeweils einem Anschlagfinger 15 dargestellt, wobei es sich von selbst versteht, dass eine Biegepresse 1 je nach Anforderung auch mehr Anschlagfinger 15 und/oder Anschlagvorrichtungen 14, oder auch nur einen Anschlagfinger 15 umfassen kann.

Die beiden in der Fig. 1 dargestellten Anschlagvorrichtungen 14 bzw. Anschlagfinge 15 sind in einem Maschineninnenraum 16 bzw. Pressenraum an einer Rückseite des Tischbalkens 4 der als Ausführungsbeispiel dargestellten Biegepresse 1 angeordnet. Die Anschlagvorrichtungen 14 können in diesem Sinne als sogenannte Hinteranschläge ausgeführt sein, wobei die Anschlagfinger 15 vom Maschineninnenraum 16 ausgehend in Richtung einer Werkstückzufuhrseite 18 jeweils in eine zum Positionieren eines Werkstücks 2 vorgesehene Anschlagposition 17 verstellt bzw. verfahren werden können. Wenn ein Anschlagfinger 15 in eine Anschlagposition 17 verstellt ist, kann sodann ein zu bearbeitendes Werkstück 2 von der Werkstückzufuhrseite 18 ausgehend an einer Anschlagfläche 19 eines Anschlagfingers 15 angelegt werden, um eine möglichst exakte Positionierung zwischen den beiden Biegewerkzeugen 8, 9 für die nachfolgende Werkstückbearbeitung bzw. Umformung durch Biegen bereitzustellen. Die in der Fig. 1 beispielhaft dargestellten Anschlagfinger 15 weisen lediglich eine vorderste Anschlagfläche 19 zum Anlegen bzw. Positionieren von Werkstücken 4 auf. Grundsätzlich können Ausführungsvarianten von Anschlagfingern 15 auch mehr als eine Anschlagfläche 19, sowie zusätzlich Auflageflächen für Werkstücke 2 umfassen.

Die in der Fig. 1 dargestellten Anschlagvorrichtungen 14 bzw. die Anschlagfinger 15 können üblicherweise mittels Antriebsanordnungen automatisiert entlang jeweils angetriebener Verstellachsen 20, 21, 22 verstellt bzw. verfahren werden. Hierbei kann ein Anschlagfinger 15 entlang zumindest einer angetriebenen Verfahr- bzw. Verstellachse 20 in eine zum Positionieren bzw. Anlegen eines Werkstücks 2 vorgesehene Anschlagposition 17 verstellt werden. Ein in einer Anschlagposition 17 befindlicher Anschlagfinger 15 ist in der Fig. 1 anhand des links dargestellten Anschlagfingers 15 veranschaulicht. Selbstverständlich können in Abhängigkeit von der jeweils vorgesehenen Biegeumformung und dem zu bearbeitenden Werkstück 2 jeweils unterschiedliche Anschlagpositionen 17 für den Anschlagfinger 15 im Maschinenkoordinatensystem der Biegepresse 1 vorgesehen sein. Hierbei ist unter anderem die Distanz des Anschlagfingers 15 in der Anschlagposition 17 zu den Biegewerkzeugen 8, 9 hinsichtlich einer Biegeschenkellänge am fertig gebogenen Werkstück von Bedeutung.

Zur Steuerung der Verfahr- bzw. Verstellbewegungen einer Anschlagvorrichtung 14 bzw. eines Anschlagfingers 15 entlang der Verstellachsen 20, 21, 22, kann eine Steuerungsvorrichtung 23 vorgesehen sein, welche mit Antriebsorganen der Antriebsanordnungen signalverbunden sein kann. Antriebsanordnungen für die Verstellachsen 20, 21, 22 sind in der Fig. 1 aus Übersichtlichkeitsgründen nicht dargestellt, und werden solche Antriebsanordnungen im Folgenden noch näher erläutert.

Wie in der Fig. 1 angedeutet ist, kann die Steuerungsvorrichtung 23 mehrere Komponenten aufweisen, beispielsweise mehrere Prozessoren bzw. Rechnerkomponenten, Eingabemittel zur Eingabe von Steuerungsbefehlen, Ausgabemittel zur Anzeige von Informationen, etc.. Des Weiteren ist es auch möglich, dass die Steuerungsvorrichtung 23 mit weiteren Steuerungskomponenten verbunden ist, beispielsweise mit mobilen Ein- und Ausgabemitteln über ein lokales Netzwerk, oder über das Internet. Grundsätzlich kann die Art und Ausgestaltung bzw. die elektronische und datentechnische Architektur der Steuerungsvorrichtung 23 beliebig von einem Fachmann auf dem Gebiet vorgenommen werden. Die Steuerungsvorrichtung 23 kann typischerweise eine CNC-Steuerung umfassen, welche die beispielhaft dargestellte Abkantpresse 1 und deren Komponenten, insbesondere Antriebsorgane der Anschlagvorrichtungen 14 mit Energie und Steuerungssignalen versorgt bzw. beaufschlagt.

Bei Abkant- bzw. Biegepressen 1 kann grundsätzlich eine Verstellung bzw. ein automatisiertes Verfahren von Anschlagfingern entlang zumindest einer Verfahr- bzw. Verstellachse 20, 21, 22 bzw. CNC-Achse vorgesehen sein. Üblicherweise ist ein Anschlagfinger zumindest entlang zweier horizontaler Verstellachsen 20, 21, nämlich entlang einer sogenannten X-Achse 20 und einer sogenannten Z-Achse 21 verstellbar ausgeführt. In vielen Fällen kann auch ein Verstellen eines Anschlagfingers 15 entlang einer vertikalen Verstellachse 22, nämlich entlang einer sogenannten R-Achse 22 vorgesehen sein. Die Ausrichtung dieser, bei einer Abkantpresse 1 üblichen Verstellachsen 20, 21, 22 ist in der perspektivischen Darstellung der Fig. 1 anhand der eingefügten Koordinatenachsen 20, 21, 22 veranschaulicht. Dabei ist eine erste, horizontale Verstellachse 20 zum automatisiert gesteuerten Verstellen eines Anschlagfingers 15 in Richtung einer Werkstückzufuhrseite 18, in eine Anschlagposition 17 vorgesehen. Grundsätzlich ist es natürlich möglich, dass je nach Ausführung einer Biegepresse 1, weniger oder mehr Verstellachsen 20, 21, 22 für Anschlagfinger vorgesehen sind, als bei dem in der Fig. 1 dargestellten Ausführungsbeispiel. Die vorderste Anschlagfläche 19 des Anschlagfingers 15 kann üblicherweise geradlinig, parallel zu der horizontalen Z-Achse 21 und der vertikalen R-Achse 22 verlaufend ausgebildet sein.

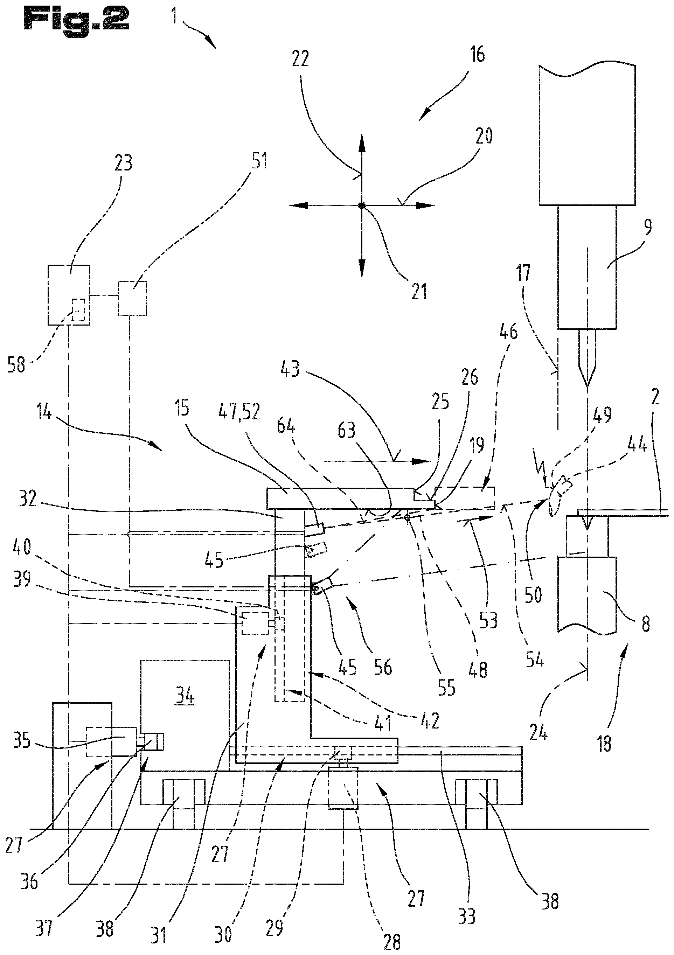

Zum besseren Verständnis ist ein Ausführungsbeispiel für eine Biegepresse 1 in der Fig. 2 in Seitenansicht dargestellt. In der Fig. 2 werden für gleiche Teile gleiche Bezugszeichen bzw. Bauteilbezeichnungen wie in der vorangegangenen Fig. 1 verwendet. Um unnötige Wiederholungen zu vermeiden, wird auf die detaillierte Beschreibung in der vorangegangenen Fig. 1 hingewiesen bzw. Bezug genommen.

In der Fig. 2 sind wiederum ein unteres Biegewerkzeug 8 und ein relativ dazu verstellbares, oberes Biegewerkzeug 9 dargestellt. Wie aus der Fig. 2 erkennbar ist, ist durch die Biegewerkzeuge 8, 9 ist eine vertikale Biegeebene 24 für Biegeumformungen von Werkstücken 2 definiert. Des Weiteren ist in der Fig. 2 eine Anschlagvorrichtung 14 mit einem Anschlagfinger 15 dargestellt. Bei diesem Ausführungsbeispiel weist der Anschlagfinger 15 die der Biegeebene 24 nächstliegende, vorderste Anschlagfläche 19, sowie eine weitere Anlege- bzw. Anschlagfläche 25 und eine Auflagefläche 26 zum Positionieren eines jeweiliges Werkstücks 2 auf. Die Anschlagvorrichtung 14 bzw. der Anschlagfinger 15 können mittels Antriebsanordnungen 27 entlang der Verstellachsen 20, 21, 22 verstellt werden. Zum automatisierten Verstellen eines Anschlagsfingers 15 können die Antriebsanordnungen 27 hierbei mit der Steuerungsvorrichtung 23 signalverbunden sein, wie die schematisch in der fig. 2 veranschaulicht ist. Die Steuerungsvorrichtung 23 kann eine CNC-Steuerung umfassen, welche Mess- und Regelschaltungen sowie eine Positionssteuerung zur Ansteuerung von Maschinenkomponenten, insbesondere zu Ansteuerung von Aktuatoren der Antriebsanordnungen 27 umfasst, wie dies an sich bekannt ist.

Bei dem in der Fig. 2 dargestellten Ausführungsbeispiel ist der Anschlagfinger 15 mittels einer Antriebsanordnung 27 entlang der ersten, horizontalen Verstellachse 20 bzw. X-Achse 20 senkrecht zur Biegeebene 24 verstellbar. Zur Verstellung des Anschlagfingers 15 entlang der ersten, horizontalen Verstellachse 20, kann diese Antriebsanordnung 27 einen Aktuator 28, etwa einen Elektromotor, insbesondere Servomotor mit einem Zahnritzel 29, und eine damit zusammenwirkende Zahnstangenanordnung 30 umfassen. Bei dem in der Fig. 2 dargestellten Ausführungsbeispiel ist die Zahnstangenanordnung 30 an einer Konsole 31 angeordnet, an welcher Konsole 31 ein Fingerträger 32 für den Anschlagfinger 15 beweglich gelagert ist, wie dies nachstehend noch beschrieben wird. Die Konsole 31 kann zur Verstellung des Anschlagfingers 15 entlang der ersten, horizontalen Verstellachse 20 an einer Führungsbahn 33 beweglich gelagert sein, welche Führungsbahn 33 an einem Konsolenträger 34 für die Konsole 31 gelagert sein kann. Wie anhand der Fig. 2 weiters ersichtlich ist, kann der Aktuator 28 für die erste horizontale Verstellachse 20 bzw. X-Achse 20 feststehend an dem Konsolenträger 34 angeordnet sein. Der Aktuator 28 kann zur Ansteuerung bzw. zur Positionssteuerung der Konsole 31 und des Anschlagfingers 15 entlang der X-Achse 20 mit der Steuerungsvorrichtung 23 signalverbunden sein.

Zum Verstellen des Anschlagfingers 15 entlang der weiteren, horizontalen Verstallachse 21 bzw. Z-Achse 21 kann dem Konsolenträger 34 eine weitere Antriebsanordnung 27 zugeordnet sein, sodass die an dem Konsolenträger 34 entlang der X-Achse 20 verstellbar gelagerte Konsole 31 und der Anschlagfinger 15 gemeinsam mit dem Konsolenträger entlang der der weiteren, horizontalen Verstellachse 21 bzw. Z-Achse 21 verstellbar ist. Wie in der Fig. 2 dargestellt ist, kann die weitere Antriebsanordnung 27 einen mit der Steuerungsvorrichtung 23 signalverbundenen, feststehenden Aktuator 35 mit einem angeflanschten Zahnritzel 36, und eine damit zusammenwirkende, an dem Konsolenträger angeordnete Zahnstangenanordnung 37 umfassen. Der Konsolenträger 34 ist hierdurch mit der Konsole 31 und dem Anschlagfinger 15 entlang der horizontalen Z-Achse 21 bzw. entlang horizontaler Führungsbahnen 38 verstellbar. Eine Verstellbewegung des Konsolenträgers 34 und des Anschlagfingers 15 entlang der weiteren, horizontalen Verstellachse 21 bzw. Z-Achse 21 entspricht in der Seitenansicht der Biegepresse 1 gemäß Fig. 2 einer horizontalen Verstellbewegung senkrecht auf die Zeichenebene.

Der Anschlagfinger 15 ist bei dem in der Fig. 2 dargestellten Ausführungsbeispiel schließlich entlang einer vertikalen Verstellachse 22 bzw. R-Achse 22 höhenverstellbar angeordnet. Der Anschlagfinger 15 kann hierzu an dem Fingerträger 32 angeordnet sein, welche Fingerträger 32 vertikal verstellbar an der Konsole 31 gelagert sein kann. Zur Verstellung des Anschlagfingers 15 entlang der R-Achse 22 kann eine weitere Antriebsanordnung 27, umfassend einen an der Konsole 31 angeordneten Aktuator 39 mit einem weiteren Zahnritzel 40, sowie eine an dem Fingerträger 32 angeordnete, mit dem Zahnritzel 40 zusammenwirkende Zahnstangenanordnung 41 vorgesehen sein, wie dies in dem Ausführungsbeispiel gemäß der Fig. 2 veranschaulicht ist. Auf diese Weise kann der Fingerträger 32 teleskopartig bezüglich der Konsole 31 entlang einer Führungsbahn 42 in vertikaler Richtung bzw. entlang der R-Achse 22 verstellbar sein.

Selbstverständlich können auch anders ausgestaltete Anschlagvorrichtungen 14 als die anhand des in der Fig. 2 dargestellten Ausführungsbeispiel vorgesehen sein. Ganz grundsätzlich kann eine Anschlagvorrichtung 14 auch andere bzw. mehr oder weniger, verstellbare Komponenten aufweisen, als die in der Fig. 2 dargestellten Komponenten 15, 31, 32, 34. Beispielsweise können Anschlagvorrichtungen 14 eingesetzt werden, bei welchen keine Vertikalverstellung von Anschlagfingern 15 vorgesehen ist. Des Weiteren können natürlich auch andere Antriebsanordnungen 27 zur Verstellung von verstellbaren Komponenten einer Anschlagvorrichtung 14 zur Anwendung kommen, wie etwa Kugelumlaufspindel-Antriebe oder andere Antriebskonzepte. Des Weiteren können im Betrieb einer Biegepresse 1 automatisiert gesteuerte Verstellbewegungen entlang vorgesehener Verstellachsen 20, 21, 22 in sequentieller Abfolge, aber auch kombiniert bzw. gleichzeitig ausgeführt werden.

Jedenfalls kann der Anschlagfinger 15 der Anschlagvorrichtung 14 im Betrieb der Biegepresse 1, gegebenenfalls nach Positionierung des Anschlagfingers 15 entlang der Z-Achse 21 und R-Achse 22, automatisiert gesteuert entlang der zumindest einen ersten, horizontalen Verstellachse 20 bzw. X-Achse 20 in Richtung der durch das untere Biegewerkzeug 8 und das relativ zum unteren Biegewerkzeug 8 verstellbaren, oberen Biegewerkzeug 9 definierten, vertikalen Biegeebene 24, in eine zum Positionieren eines Werkstücks 2 vorgesehene Anschlagposition 17, siehe auch Fig. 1, verstellt werden. Selbstverständlich können in Abhängigkeit von der jeweils vorgesehenen Biegeumformung und dem zu bearbeitenden Werkstück 2 jeweils unterschiedliche Anschlagpositionen 17 für den Anschlagfinger 15 im Maschinenkoordinatensystem der Biegepresse 1 vorgesehen sein. Eine Distanz des Anschlagfingers 15 in der Anschlagposition 17 zu der Biegeebene 24 bestimmt hierbei eine Biegeschenkellänge am fertig gebogenen Werkstück.

Eine Verstellung entlang der X-Achse 20 zu der Biegeebene 24 hin in eine Anschlagposition 17 erfolgt in Verstellrichtung 43, wie dies in der Fig. 2 anhand des Pfeils 43 veranschaulicht ist. Im Besonderen besteht bei einer Verstellbewegung eines Anschlagfingers 15 entlang der zumindest einen ersten, horizontalen Verstellachse 20 in Verstellrichtung 43 ein erhöhtes Risiko von Kollisionen des Anschlagfingers 15 mit Objekten bzw. Hindernissen 44, beispielsweise einer Hand oder eines Fingers einer Bedienperson. Dies, da im Bereich der Werkstückzufuhrseite 18 oftmals Bedienpersonen arbeiten, beispielsweise mit zu bearbeitenden Werkstücken 2 hantieren.

Zur Vermeidung potentieller Kollisionen mit Hindernissen 44 ist vorgesehen, dass an der Anschlagvorrichtung 14 eine entlang aller für den Anschlagfinger 15 vorgesehenen, horizontalen Verstellachsen 20, 21 bewegungsgekoppelt mit dem Anschlagfinger 15 verstellbare Bilderfassungsvorrichtung 45 angeordnet ist. Die Bilderfassungsvorrichtung 45 ist hierbei zumindest zur Überwachung eines, während einer Verstellbewegung des Anschlagfingers 15 entlang der ersten, horizontalen Verstellachse 20 bzw. X-Achse 20 in eine Anschlagposition 17, der vordersten Anschlagfläche 19 horizontal vorauseilenden Überwachungsbereich 46 zwischen der vordersten Anschlagfläche 19 und der Biegeebene 24 ausgerichtet, wie dies in der Fig. 2 veranschaulicht ist.

Die Bilderfassungsvorrichtung 45 kann zum Beispiel durch eine Kamera, insbesondere CCD-Kamera gebildet sein. Bei dem in der Fig. 2 dargestellten Ausführungsbeispiel ist die Bilderfassungsvorrichtung 45 an der Konsole 31 angeordnet, sodass die Bilderfassungsvorrichtung 45 entlang der X-Achse 20 und der Z-Achse 21 mit dem Anschlagfinger 15 bewegungsgekoppelt verstellbar ist. Bei einem weiteren Ausführungsbeispiel ist es aber auch möglich, dass die Bilderfassungsvorrichtung 45 entlang aller für den Anschlagfinger 15 vorgesehenen Verstellachsen 20, 21, 22 mit dem Anschlagfinger 15 bewegungsgekoppelt verstellbar an der Anschlagvorrichtung 14 angeordnet ist, beispielsweise wie in der Fig.2 strichliert angedeutet an dem Fingerträger 32 angeordnet ist, oder über Verbindungs- bzw. Befestigungsstücke an dem Anschlagfinger 15 selbst angeordnet ist.

Auf diese Weise kann im Betrieb der Biegepresse 1 während einer automatisiert gesteuerten Verstellbewegung des Anschlagfingers 15 entlang der ersten Verstellachse 20 in die Anschlagposition 17 mittels der, entlang aller für den Anschlagfinger 15 vorgesehenen, horizontalen Verstellachsen 20, 21 mit dem Anschlagfinger 15 bewegungsgekoppelt an der Anschlagsvorrichtung 14 angeordneten Bilderfassungsvorrichtung 45, ein in Verstellrichtung 43 dem Anschlagfinger 15 horizontal vorauseilender Überwachungsbereich 46 zwischen der vordersten Anschlagfläche 19 und der Biegeebene 24 hinsichtlich Hindernisse 44 überwacht werden.

Mittels der als weiteres Ausführungsbeispiel in der Fig.2 strichliert dargestellten, an dem Fingerträger 32 angeordneten Bilderfassungsvorrichtung 45, kann aber auch vorgesehen sein, dass der in Verstellrichtung 43 dem Anschlagfinger 15 horizontal vorauseilende Überwachungsbereich 46 mittels dieser, entlang aller für den Anschlagfinger 15 vorgesehenen Verstellachsen 20, 21, 22 mit dem Anschlagfinger 15 bewegungsgekoppelt an der Anschlagsvorrichtung 14 angeordneten Bilderfassungsvorrichtung 45 überwacht wird.

Zur schnellen und sicheren Erfassung von Hindernissen 44 ist außerdem vorgesehen, dass beabstandet von der Bilderfassungsvorrichtung 45 an der Anschlagvorrichtung 14 eine entlang aller für den Anschlagfinger 15 vorgesehenen, horizontalen Verstellachsen 20, 21 mit dem Anschlagfinger 15 bewegungsgekoppelt verstellbare Beleuchtungsvorrichtung 47 angeordnet ist. Die Beleuchtungsvorrichtung 47 ist hierbei zur Abstrahlung eines ersten Lichtbündels 48 in den, während der Verstellbewegung entlang der ersten Verstellachse 20 in die Anschlagposition 17, der vordersten Anschlagfläche 19 horizontal vorauseilenden Überwachungsbereich 46 ausgerichtet, wie dies in der Fig. 2 veranschaulicht ist.

Wie anhand des in der Fig. 2 dargestellten Ausführungsbeispiels ersichtlich ist, kann vorzugsweise die Beleuchtungsvorrichtung 47 an dem Fingerträger 32 angeordnet, sodass die Beleuchtungsvorrichtung 47 entlang aller für den Anschlagfinger 15 vorgesehenen Verstellachsen 20, 21, 22 mit dem Anschlagfinger bewegungsgekoppelt verstellbar an der Anschlagvorrichtung angeordnet sein kann. Grundsätzlich ist es auch denkbar, dass die Beleuchtungsvorrichtung 47 über Verbindungs- bzw. Befestigungsstücke an dem Anschlagfinger 15 selbst angeordnet ist.

Auf diese Weise kann im Betrieb der Biegepresse 1 zur Erfassung von Hindernissen mittels dieser, entlang aller für den Anschlagfinger 15 vorgesehenen, horizontalen Verstellachsen 20, 21 mit dem Anschlagfinger 15 bewegungsgekoppelt und von der Bilderfassungsvorrichtung 45 beabstandet an der Anschlagsvorrichtung 14 angeordneten und der vordersten Anschlagfläche 19 während der Verstellbewegung in die Anschlagposition 17 in Verstellrichtung 43 nacheilenden Beleuchtungsvorrichtung 47, ein erstes Lichtbündel 48 in den der Anschlagfläche 19 vorauseilenden Überwachungsbereich 46 gestrahlt werden.

Bei der in der Fig. 2 dargestellten, bevorzugten Ausführungsform kann vorgesehen sein, dass das erste Lichtbündel 48 mittels einer, entlang aller für den Anschlagfinger 15 vorgesehenen Verstellachsen 20, 21, 22 mit dem Anschlagfinger 15 bewegungsgekoppelt an der Anschlagsvorrichtung 14 angeordneten Beleuchtungsvorrichtung 47 in den der Anschlagfläche 19 vorauseilenden Überwachungsbereich 46 gestrahlt wird.

Ganz grundsätzlich kann es von Vorteil sein, wenn die Bilderfassungsvorrichtung 45 und die Beleuchtungsvorrichtung 47 derart an der Anschlagvorrichtung 14 angeordnet sind, dass die Bilderfassungsvorrichtung 45 und die Beleuchtungsvorrichtung 47 der vordersten Anschlagfläche 19 des Anschlagfinger 15 während der Verstellbewegung in die Anschlagposition 17 in Verstellrichtung 43 nacheilen. Die Bilderfassungsvorrichtung 45 und die Beleuchtungsvorrichtung 47 sind hierbei vor Beschädigungen möglichst gesichert in dem Maschineninnenraum 16 der Biegepresse 1 angeordnet. Außerdem ist hierdurch eine erfassungssichere Detektion von Hindernissen 44 gewährleistet. Des Weiteren kann es zweckmäßig sein, dass Bilderfassungsvorrichtung 45 und die Beleuchtungsvorrichtung 47 unterhalb des Anschlagfingers 15 an der Anschlagvorrichtung 14 angeordnet sind, wie dies auch anhand des in der Fig. 2 dargestellten Ausführungsbeispiels veranschaulicht ist.

Sofern im Rahmen dieses Dokuments von einem Überwachungsbereich 46 die Rede ist, soll hierunter der der Anschlagfläche 19 des Anschlagfingers zwischen der Anschlagfläche 19 und der Biegeebene 24 während der Verstellbewegung des Anschlagfingers 15 entlang der horizontalen Verstellachse 20 vorauseilende Bereich verstanden werden, in welchem eine Kollisionsgefahr mit Hindernissen 44 besteht. Durch die Bewegungskopplung der Bilderfassungsvorrichtung 45 mit dem Anschlagfinger 15, zumindest entlang aller horizontalen Verstellachsen 20, 21, wird der Überwachungsbereich 46 während Verstellbewegungen des Anschlagfingers 15 entsprechend mitbewegt. Der Überwachungsbereich 46 kann bei manchen Ausführungsformen auch der vordersten Anschlagfläche 19 jeweils vorauseilende Bereiche seitlich der Anschlagfläche 19 mit umfassen. Unabhängig hiervon kann ein Erfassungsbereich der Bilderfassungsvorrichtung 45 größer dimensioniert sein als der Überwachungsbereich 46, in welchem ein potentielles Kollisionsrisiko mit Hindernissen 44 besteht. Die Bilderfassungsvorrichtung 45 kann auch justierbar, beispielsweise schwenkbar an der Anschlagvorrichtung 14 angeordnet sein, beispielsweise um eine Einstellung bzw. Verstellung des Überwachungsbereiches 46 zu ermöglichen.

Die Bilderfassungsvorrichtung 45 ist im Besonderen zur Erfassung einer durch das erste Lichtbündel 48 auf einer Objektoberfläche 49 eines Hindernisses 44 projizierten, ersten Lichtabbildung 50 ausgerichtet und konfiguriert. Das von der Beleuchtungsvorrichtung 47 abgestrahlte, erste Lichtbündel 48 kann hierbei im Prinzip jedwede Querschnittsform aufweisen, beispielsweise durch einen Lichtkegel, Lichtzylinder oder eine andere Lichtbündelstruktur gebildet sein. Auf einer Objektoberfläche 49, zum Beispiel eines Hindernisses 44 werden in Abhängigkeit von der räumlich, geometrischen Beschaffenheit der von dem ersten Lichtbündel 48 angestrahlten Objektoberfläche 49 entsprechend geometrisch geformte, erste Lichtabbildungen 50 durch das erste Lichtbündel 48 projiziert. Bestimmte Querschnittsformen des ersten Lichtbündels 48 können hierbei insbesondere hinsichtlich einer Bestimmung bzw. Erfassung der geometrischen Beschaffenheit von Oberflächen bzw. Objektoberflächen 49 besonders vorteilhaft sein, wie dies nachstehend noch näher erläutert wird.

Wie in der Fig. 2 schematisch veranschaulicht ist, sind die Beleuchtungsvorrichtung 47 und die Bilderfassungsvorrichtung 45 mit der Steuerungsvorrichtung 23 oder einer separaten Sicherheitssteuerung 51 signalverbunden. Eine solche, separate Sicherheitssteuerung 51 wird bei automatisiert gesteuerten Maschinen wie beispielsweise Biegepressen 1 typischerweise für sicherheitsrelevante Aufgaben eingesetzt. Eine solche Sicherheitssteuerung 51 kann wiederum mit einer Steuerungsvorrichtung 23 signalverbunden sein, wie dies ebenfalls in der Fig. 2 schematisch veranschaulicht ist. Jedenfalls ist je nach Steuerungskonzept die Steuerungsvorrichtung 23 oder die Sicherheitssteuerung 51 bei Erfassung eines Hindernisses während der Verstellbewegung des Anschlagfingers 15 entlang der ersten Verstellachse 20 in eine Anschlagposition 17, zur Durchführung einer Sicherheitsmaßnahme ausgebildet. Auf diese Weise kann im Betrieb der Biegepresse 1 bei Erfassung eines Hindernisses während der Verstellbewegung des Anschlagfingers 15 entlang der ersten Verstellachse 20 in die Anschlagposition 17 automatisiert gesteuert eine Sicherheitsmaßnahme durchgeführt werden. Als Sicherheitsmaßnahme kann beispielsweise ein unverzügliches Stoppen der Verstellbewegung des Anschlagfingers 15 oder eine Rückstellbewegung des Anschlagfingers 15 in Gegenrichtung ausgelöst werden, oder sogar eine umgehende Stillsetzung der gesamten Biegepresse 1 durchgeführt werden. Zusätzlich kann zum Beispiel ein Warnsignal bzw. Alarm ausgelöst werden.

Der Überwachungsbereich 46 soll im Speziellen so gewählt werden, dass während der horizontalen Verstellbewegung des Anschlagsfingers 15 in eine Anschlagposition 17 ein in Verstellrichtung 43 entlang der ersten, horizontalen Verstellachse 20 ein sich ausreichend vor der vordersten Anschlagfläche 19 erstreckender Bereich erfasst werden kann bzw. umfasst ist, um Hindernisse 44 rechtzeitig erfassen zu können. Um Kollisionen möglichst vermeiden zu können sind hierbei unter anderem ein steuerungs- und antriebstechnisch bedingter Anhalteweg für den Anschlagfinger 15, und ein maximal möglicher Positionsfehler des Anschlagfingers 15 bzw. der vordersten Anschlagfläche 19 des Anschlagfingers 15 zu berücksichtigen. Der Anhalteweg kann hierbei einen antriebsbedingten Bremsweg, sowie einen steuerungstechnisch bedingten Reaktionsweg enthalten. Der Reaktionsweg kann durch die Bilderfassungs- bzw. Messzeit, und durch Buszyklen und Berechnungszyklen der Steuerungsvorrichtung 23 oder der Sicherheitssteuerung 51 bedingten Verzögerungen, bestimmt sein. Die genannten Parameter zur Festlegung des Überwachungsbereichs können je nach der Ausgestaltung einer jeweiligen Biegepresse 1 natürlich individuell berücksichtigt bzw. berechnet werden.

Im Prinzip können zur sicheren und möglichst raschen Erfassung bzw. Erkennung von Hindernissen 44 auf Basis einer ersten Lichtabbildung 50 unterschiedliche Erfassungs- und Auswertungskonzepte zur Anwendung kommen. Zum Beispiel kann vorgesehen sein, dass die Beleuchtungsvorrichtung 47 und die Bilderfassungsvorrichtung 45 derart an der Anschlagvorrichtung 14 ausgerichtet angeordnet werden bzw. sind, dass bei ordnungsgemäßen Betriebszuständen zumindest während der Verstellbewegung des Anschlagfingers 15 in die Anschlagsposition 17 durch das erste Lichtbündel 48 keine erste Lichtabbildung 50 auf eine Oberfläche einer Komponente der Biegepresse 1 projiziert wird oder keine erste Lichtabbildung 50 auf einer Oberfläche einer Komponente der Biegepresse 1 durch die Bilderfassungsvorrichtung 45 erfassbar ist. In diesem Fall kann unmittelbar bei einer Erfassung einer durch das erste Lichtbündel 48 auf einer Objektoberfläche 49 eines Hindernisses 44 projizierten, ersten Lichtabbildung 50 die Sicherheitsmaßnahme durchgeführt werden.

Die Bilderfassungsvorrichtung 45 und die Beleuchtungsvorrichtung 47 können hierbei beispielsweise derart an der Anschlagvorrichtung 14 angeordnet sein, dass allfällige durch das erste Lichtbündel 48 auf Oberflächen von Maschinenkomponenten projizierten Lichtabbildungen von der Bilderfassungsvorrichtung abgeschattet sind, etwa durch den Anschlagfinger 15 selbst. In Abhängigkeit von dem konstruktiven Aufbau einer Biegepresse 1 ist es aber auch möglich, dass die Beleuchtungsvorrichtung 47 derart an der Anschlagvorrichtung 14 angeordnet wird, dass zumindest während der Verstellbewegung des Anschlagfingers 15 in die Anschlagsposition 17 keine erste Lichtabbildung 50 auf eine Oberfläche einer Komponente der Biegepresse 1 projiziert wird.

Alternativ oder zusätzlich ist es aber auch möglich, dass während der Verstellbewegung des Anschlagfingers 15 in die Anschlagposition 17 erfasste Bilddaten fortwährend mit hinterlegten Referenzdaten, welche einen Verlauf bzw. Ablauf von Bilddaten bei ordnungsgemäßen Betriebszuständen während der Verstellbewegung in die Anschlagsposition 17 kennzeichnen, abgeglichen werden, und dass bei einer Erfassung einer verlaufs- bzw. ablaufstechnisch atypisch auftretenden, ersten Lichtabbildung 50 auf einer Objektoberfläche 49 eines Hindernisses 44 die Sicherheitsmaßnahme durchgeführt wird.

Referenzdaten, welche einen ordnungsgemäßen Verlauf einer Verstellbewegung des Anschlagfingers 15 in eine Anschlagposition 17 kennzeichnen, können zum Beispiel im Zuge einer jeweiligen Referenzverstellung des Anschlagfingers 15 entsprechend aufgenommen bzw. aufgezeichnet werden. Derartige Referenzdaten können etwa in einer Speichereinheit der Steuerungsvorrichtung 23 oder der Sicherheitssteuerung 51, oder auch in einer separaten Bildauswertevorrichtung hinterlegt bzw. gespeichert werden. Durch Auswertung bzw. rechnerischen Vergleich der während einer Verstellbewegung des Anschlagfingers 15 erfassten Bilddaten mit den für diese Verstellbewegung hinterlegten Referenzdaten kann dann zum Beispiel im Falle einer während der Verstellbewegung zu einem atypischen bzw. nicht ordnungsgemäßen Zeitpunkt auftretenden, ersten Lichtabbildung 50 die Sicherheitsmaßnahme durchgeführt bzw. automatisiert gesteuert ausgelöst werden.

Es kann aber auch zweckmäßig sein, eine bildlich erfasste, geometrisch Form einer ersten Lichtabbildung 50 als Kriterium für das automatisierte Durchführen einer Sicherheitsmaßnahme heranzuziehen. Hierzu kann es zweckmäßig sein, wenn die Beleuchtungsvorrichtung 47 einen Linienlaser 52 umfasst, welcher derart an der Anschlagvorrichtung 14 angeordnet ist, dass ein divergentes oder weitestgehend paralleles, erstes Lichtbündel 48, dessen Strahlengang 53 eine erste Lichtebene 54 bildet, in den, während der Verstellbewegung entlang der ersten Verstellachse 20 in die Anschlagposition 17, der vordersten Anschlagfläche 19 horizontal vorauseilenden Überwachungsbereich 46 strahlbar ist. Hierbei kann eine normal zum Strahlengang 53 verlaufende Lichtbündelquerachse 55 der ersten Lichtebene 54 zumindest weitestgehend parallel zu der vordersten Anschlagfläche 19 des Anschlagfingers 15 ausgerichtet sein, wie dies in der Fig. 2 veranschaulicht ist. Die Lichtbündelquerachse 55 der ersten Lichtebene 54 verläuft in der Fig. 2 hierbei senkrecht auf die Zeichenebene.

Der Linienlaser 52 und die Bilderfassungsvorrichtung 45 können auf diese Weise eine Lichtschnittsensoranordnung 56 bilden. Im Betrieb der Biegepresse 1 kann mittels des Linienlasers 52 das erste Lichtbündel 48 als divergentes oder weitestgehend paralleles Lichtbündel 48, dessen Strahlengang 53 die erste Lichtebene 54 bildet, in den der vordersten Anschlagfläche 19 horizontal vorauseilenden Überwachungsbereich 46 gestrahlt werden.

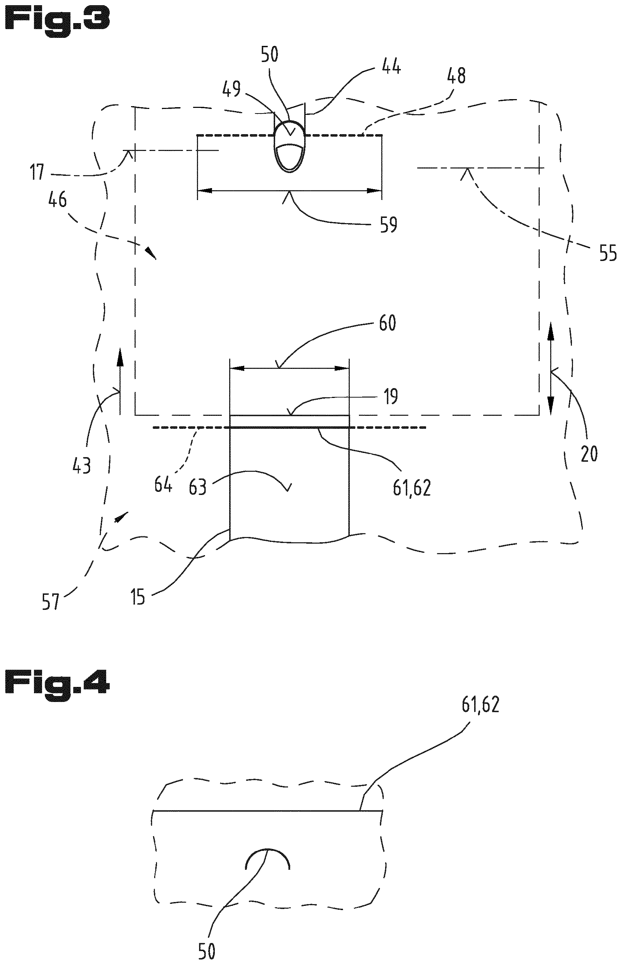

Zur besseren Ersichtlichkeit wird eine Verwendung eines solchen, mittels eines Linienlasers 52 in den Überwachungsbereich 46 strahlbaren, ersten Lichtbündels 48 anhand der Fig. 3 näher erläutert. Die Fig. 3 zeigt ausschnittsweise einen mittels der Bilderfassungsvorrichtung 45 erfassbaren Erfassungsbereich 57 während einer Verstellbewegung des Anschlagfingers 15 entlang der ersten, horizontalen Verstellachse 20 bzw. X-Achse 20 in Verstellrichtung 43 in eine Anschlagposition 17, siehe Fig. 2, in Vertikalansicht von unten. In der Fig. 3 werden wiederum für gleiche Teile gleiche Bezugszeichen bzw. Bauteilbezeichnungen wie in den vorangegangenen Fig. 1 und 2 verwendet. Um unnötige Wiederholungen zu vermeiden, wird auf die detaillierte Beschreibung in den vorangegangenen Fig. 1 und 2 hingewiesen bzw. Bezug genommen.

Das erste Lichtbündel 48 kann während der Verstellbewegung des Anschlagfingers 15 in die Anschlagposition 17 in den der vordersten Anschlagfläche 19 des Anschlagfingers 15 horizontal vorauseilenden Überwachungsbereich 46 eingestrahlt werden. Wie am besten durch Zusammenschau der Fig. 2 und Fig. 3 ersichtlich ist, kann im Falle der Verwendung eines Linienlasers 52 die normal zum Strahlengang 53 des ersten Lichtbündels 48 verlaufende Lichtbündelquerachse 55 der ersten Lichtebene 54 zumindest weitestgehend parallel zu der vordersten Anschlagfläche 19 des Anschlagfingers 15 ausgerichtet werden. Wie in der Fig. 3 weiter veranschaulicht ist, kann während der Verstellbewegung des Anschlagfingers 15 in Verstellrichtung 43 durch ein solches, erstes Lichtbündel 48 auf eine Objektoberfläche 49 eines Hindernisses 44, wie etwa auf den beispielhaft dargestellten, menschlichen Finger, eine erste Lichtabbildung 50 projiziert werden. Das erste Lichtbündel 48 ist in der Fig. 3 zur besseren Ersichtlichkeit nur in der Abbildungsebene der ersten Lichtabbildung 50 dargestellt. Das erste Lichtbündel 48 kann beispielsweise in einem spitzen Winkel zu einer Horizontalebene in den dem Anschlagfinger 15 bzw. der vordersten Anschlagfläche 19 vorauseilenden Überwachungsbereich 46 eingestrahlt werden, wie dies am besten in der Fig. 2 ersichtlich ist.

Die von der Bilderfassungsvorrichtung 45 erfasste Form der ersten Lichtabbildung 50 ist abhängig vom Betrachtungswinkel, und vor allem von der Form bzw. dem geometrischen Verlauf der Objektoberfläche 49. Auf diese Weise kann eine geometrische Form der angestrahlten Objektoberfläche 49 im Sinne eines Lichtschnittverfahrens mittels einer Lichtschnittsensoranordnung 56 bildlich erfasst werden. Auf einer ebenen Oberfläche würde mittels des Linienlasers 52 ein geradlinig verlaufender, erster Lichtstreifen projiziert werden. Wie anhand der Fig. 3 ersichtlich ist, weist die mittels der Bilderfassungsvorrichtung 45 erfasste, geometrische Form der ersten Lichtabbildung 50, welche durch das erste Lichtbündel 48 des Linienlasers 52 auf eine Objektoberfläche 49 eines menschlichen Fingers bzw. Hindernisses 44 projiziert wird, einen nichtlinearen, gekrümmten Verlauf auf.

Im Falle der Verwendung einer Lichtschnittsensoranordnung 56, siehe Fig. 2 kann in weiterer Folge dann vorgesehen sein, dass während der Verstellbewegung des Anschlagfingers 15 in die Anschlagposition 17 erfasste Bilddaten mittels einer Bildauswertungsvorrichtung 58 hinsichtlich einer abbildungstechnisch erfassten Geometrie einer ersten Lichtabbildung 50 ausgewertet werden, und dass bei Erfassung einer nichtlinearen, ersten Lichtabbildung 50, insbesondere bei Detektion einer gekrümmten, ersten Lichtabbildung 50, siehe Fig. 3, die Sicherheitsmaßnahme durchgeführt wird. Eine Bildauswertevorrichtung 58 kann zum Beispiel Bestandteil der Steuerungsvorrichtung 23 sein, bzw. kann die Steuerungsvorrichtung 23 eine Bildauswertevorrichtung 58 umfassen, wie dies in der Fig. 2 schematisch dargestellt ist. Alternativ kann auch eine separate, mit der Steuerungsvorrichtung 23 und/oder der Sicherheitssteuerung 51 signalverbundene Bildauswertevorrichtung 58 vorgesehen sein.

Der Linienlaser 52 kann außerdem derart konfiguriert und angeordnet sein, dass eine parallel zu der Lichtbündelquerachse 55 verlaufende Breitenerstreckung 59 der ersten Lichtebene 54 des ersten Lichtbündels 48 in dem Überwachungsbereich 46 größer ist als eine Horizontalerstreckung 60 der vordersten Anschlagfläche 19 des Anschlagfingers 15. Auf diese Weise können auch Hindernisse 44 seitlich bezüglich der Verstellrichtung 43 des Anschlagfingers 15 mittels der Bilderfassungsvorrichtung 45 erfasst werden.

Wie in der Fig. 3 dargestellt ist, kann im Betrieb der Biegepresse 1 sodann das erste Lichtbündel 48 derart in den der vordersten Anschlagfläche 19 horizontal vorauseilenden Überwachungsbereich 46 gestrahlt werden, dass die parallel zur Lichtbündelquerachse 55 verlaufende Breitenerstreckung 59 der ersten Lichtebene 54 in dem Überwachungsbereich 46 größer gewählt wird als die Horizontalerstreckung 60 der vordersten Anschlagfläche 19 des Anschlagfingers 15. Beispielsweise kann vorgesehen sein, dass die parallel zur Lichtbündelquerachse 55 verlaufende Breitenerstreckung 59 der ersten Lichtebene 54 im Bereich des Anschlagfingers 15 bzw. in dem Überwachungsbereich 46 in etwa doppelt so groß gewählt wird, wie die Horizontalerstreckung 60 der vordersten Anschlagfläche 19 des Anschlagfingers 15.

Bei einer bevorzugten Ausführungsvariante kann vorgesehen sein, dass mittels der Beleuchtungsvorrichtung 47 zumindest während der Verstellbewegung in die Anschlagposition 17 permanent eine zweite Lichtabbildung 61, insbesondere ein zumindest vorwiegend parallel zu der vordersten Anschlagfläche 19 ausgerichteter Lichtstreifen 62 auf eine mittels der Bilderfassungsvorrichtung 45 erfassbare Oberfläche 63 des Anschlagfingers 15, projiziert wird. Hierzu kann beispielsweise vorgesehen sein, dass der Linienlaser 52 zur Projektion eines solchen, parallel zu der vordersten Anschlagfläche 19 des Anschlagfingers 15 verlaufenden, Lichtstreifens 62 auf eine Oberfläche 63 des Anschlagfingers 15 konfiguriert und angeordnet ist, wie am besten durch Zusammenschau der Fig. 2 und Fig. 3 ersichtlich ist. Zur Projektion der zweiten Lichtabbildung 61 bzw. des Lichtstreifens 62 auf die Oberfläche kann hierbei mittels der Beleuchtungsvorrichtung 47 bzw. dem Linienlaser 52 ein zweites Lichtbündel 64, welches auf die Oberfläche 63 des Anschlagfingers 15 gestrahlt wird, erzeugt werden. Zur fortwährenden Erfassung der zweiten Lichtabbildung 61 soll die zweite Lichtabbildung 61 bzw. der Projektionsort auf der Oberfläche 63 des Anschlagfingers 15 selbstverständlich in dem von der Bilderfassungsvorrichtung 45 erfassbaren Erfassungsbereich 57 liegen, wie dies auch in der Fig. 3 veranschaulicht ist. Wie in der Fig. 2 und der Fig. 3 dargestellt ist, kann die zweite Lichtabbildung 61 zum Beispiel nahe der vordersten Anschlagfläche 19 auf die Oberfläche 63 des Anschlagfingers 15 projiziert werden. Hierdurch ist eine sicherheitsrelevante Maßnahme zur Funktionsüberprüfung der Beleuchtungsvorrichtung 47 und der Bilderfassungsvorrichtung 45 bereitgestellt, da die zweite Lichtabbildung 61 bei ordnungsgemäßer Funktion und aktivierter Beleuchtungsvorrichtung 47 fortwährend von der Bilderfassungsvorrichtung 45 erfassbar ist.

Zum besseren Verständnis bzw. zur besseren Ersichtlichkeit, wurde in der Fig. 3 eine Ansicht von unten auf den Anschlagfinger 15 gewählt. Eine jeweilige Anordnung der mittels der Bilderfassungsvorrichtung 45 erfassten, ersten Lichtabbildung 48 und zweiten Lichtabbildung 61 bzw. des Lichtstreifens 62 aus dem Blickwinkel bzw. im Blickfeld der Bilderfassungsvorrichtung 45 erfassten Bildern, ist selbstverständlich von der Anordnung und Ausrichtung, bzw. dem Blickwinkel der Bilderfassungsvorrichtung 45, sowie der Anordnung und Ausrichtung Beleuchtungsvorrichtung 47, und der Anordnung und Ausrichtung der Bilderfassungsvorrichtung 45 und Beleuchtungsvorrichtung 47 relativ zueinander, abhängig. In der Fig. 4 ist rein beispielhaft eine bildliche Erfassung einer ersten Lichtabbildung 48 und zweiten Lichtabbildung 61 bzw. eines Lichtstreifens 62 aus dem Blickwinkel einer Bilderfassungsvorrichtung 45 dargestellt, wobei die Darstellung in Fig. 4 zumindest annähernd der in der Fig. 2 dargestellten Anordnung der Bilderfassungsvorrichtung 45 und Beleuchtungsvorrichtung 47 entspricht. Selbstverständlich sind auch andere Anordnungen der Bilderfassungsvorrichtung 45 und Beleuchtungsvorrichtung 47 als in der Fig. 2 dargestellt denkbar, wobei sich eine jeweilige, relative Anordnung der mittels der Bilderfassungsvorrichtung 45 erfassten, ersten Lichtabbildung 48 und zweiten Lichtabbildung 61 bzw. des Lichtstreifens 62 in den von einer jeweiligen, anders als in Fig. 2 dargestellt, angeordneten Bilderfassungsvorrichtung 45 erfassten Bildern entsprechend ändert.

Ganz grundsätzlich kann das erste Lichtbündel 48 bzw. die Überwachung unabhängig von dem Status des Anschlagfingers 15 während des Betriebs der Biegepresse 1 für die Detektion von Hindernissen 44 permanent aktiviert sein, sodass eine Überwachung bei Verstellbewegungen des Anschlagfingers 15 entlang aller Verstellachsen 20, 21, 22 durchgeführt wird. Je nach Konfiguration und Aufbau der Biegepresse 1, und/oder je nach vorgesehener Biegeumformung kann es aber auch zweckmäßig sein, wenn die Beleuchtungsvorrichtung 47 nur bei bestimmten Betriebszuständen bzw. Verstellbewegungen des Anschlagfingers 15 zur Abstrahlung des ersten Lichtbündels 48 aktiviert wird. Dies kann im Besonderen vorteilhaft zur Vermeidung ungewollt ausgelöster Sicherheitsmaßnahmen sein.

So kann zum Beispiel vorgesehen sein, dass das erste Lichtbündel 48 und/oder die Überwachung bei Erreichen einer steuerungstechnisch vorgegebenen Anschlagposition 19 umgehend deaktiviert wird oder werden. Es kann aber auch ganz grundsätzlich vorgesehen sein, dass das erste Lichtbündel 48 und/oder die Überwachung bei einem steuerungstechnisch vorgegebenen Stillstand des Anschlagfingers 15 deaktiviert wird oder werden. Die Überwachung kann zum Beispiel rein steuerungstechnisch deaktiviert sein, sodass auch bei Detektion einer atypischen, ersten Lichtabbildung 50 von der Steuerungsvorrichtung 23 oder Sicherheitssteuerung 51 keine Sicherheitsmaßnahme durchgeführt wird. Alternativ kann die Abstrahlung des ersten Lichtbündels 48 deaktiviert werden, sodass die Bilderfassungsvorrichtung 45 keine erste Lichtabbildung 50 erfassen kann. Bei einem bereits in Anschlagposition 17 befindlichen Anschlagfinger 15 besteht keine Kollisionsgefahr durch eine Verstellbewegung, sodass eine Deaktivierung der Überwachung im Prinzip kein Sicherheitsrisiko darstellt.

Des Weiteren kann vorgesehen sein, dass das erste Lichtbündel 48 und/oder die Überwachung bei einem automatisiert gesteuerten Start der Verstellbewegung des Anschlagfingers 15 in die Anschlagposition 17 umgehend aktiviert wird oder werden. Hierdurch kann sichergestellt werden, dass zumindest die Überwachung der besonders sicherheitsrelevanten Verstellbewegung des Anschlagfingers 15 entlang der ersten, horizontalen Verstellachse 20 in die Anschlagposition 17 umgehend aktivierbar ist, und damit erhöhte Betriebs-, insbesondere Personensicherheit bereitgestellt ist.

Abschließend wird festgehalten, dass die obenstehend beschriebenen Verfahrenskonzepte bzw. baulichen Merkmale auch für eine Überwachung von Verstellbewegungen des Anschlagfingers 15 entlang der weiteren, horizontalen Verstellachse 21 bzw. Z-Achse 21, welche weitere Verstellachse 21 in einer Horizontalebene gegenüber der ersten, horizontalen Verstellachse 20 bzw. X-Achse 20 gedreht ist, anwendbar sind. Im Besonderen ist für den Fachmann klar, dass eine Überwachung von Verstellbewegungen entlang der weiteren, horizontalen Verstellachse 21 in äquivalenter Weise dadurch möglich ist, dass die Beleuchtungsvorrichtung 47 und die Bilderfassungsvorrichtung 45 im Uhrzeigersinn oder gegen den Uhrzeigersinn in der Horizontalebene um 90 ° gegenüber dem beschriebenen Ausführungsbeispiel für die erste, horizontale Verstellachse 20 gedreht an der Anschlagsvorrichtung 14 angeordnet werden. Im Prinzip kann hierbei vorgesehen sein, dass mittels der beschriebenen Bilderfassungsvorrichtung 45 jeweils dem Anschlagfinger 15 bei Verstellbewegungen entlang der weiteren, horizontalen Verstellachse 21 vorauseilende Überwachungsbereiche überwacht werden. Es kann außerdem vorgesehen sein, dass mittels der beschriebenen Beleuchtungsvorrichtung zusätzlich zum ersten Lichtbündel 48 jeweils weitere Lichtbündel in die dem Anschlagfinger 15 bei Verstellbewegungen entlang der weiteren, horizontalen Verstellachse 21 vorauseilende Überwachungsbereiche gestrahlt werden. Selbstverständlich ist es grundsätzlich auch möglich, dass zusätzlich zu der beschriebenen Bilderfassungsvorrichtung 45 und der beschriebenen Beleuchtungsvorrichtung 47 zur Überwachung von Verstellbewegungen entlang der X-Achse, jeweils weitere Bilderfassungsvorrichtungen und Beleuchtungsvorrichtungen zur Überwachung von Verstellbewegungen in beiden Richtungen entlang der weiteren, horizontalen Verstellachse 21 angeordnet sind. Auf diese Weise können auch Verstellbewegungen entlang der weiteren, horizontalen Verstellachse 21 überwacht werden, und kann eine potentielle Kollisionsgefahr mit Hindernissen oder die Gefahr einer Quetschung von Gliedmaßen einer Person, wie etwa bei Annäherungen eines Anschlagfingers 15 an eine Begrenzung der Biegepresse 1, oder bei Annäherung zweier Anschlagfinger 15 relativ zueinander, hintangehalten werden.

Der Schutzbereich ist durch die Ansprüche bestimmt.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Biegepresse | 31 | Konsole |
| 2 | Werkstück | 32 | Fingerträger |
| 3 | Aufstandsfläche | 33 | Führungsbahn |
| 4 | Tischbalken | 34 | Konsolenträger |
| 5 | Pressbalken | 35 | Aktuator |
| 6 | Antriebsmittel | 36 | Zahnritzel |
| 7 | Hydraulikzylinder | 37 | Zahnstangenanordnung |
| 8 | Biegewerkzeug | 38 | Führungsbahn |
| 9 | Biegewerkzeug | 39 | Aktuator |
| 10 | Werkzeugaufnahme | 40 | Zahnritzel |
| 11 | Stirnfläche | 41 | Zahnstangenanordnung |
| 12 | Werkzeugaufnahme | 42 | Führungsbahn |
| 13 | Stirnfläche | 43 | Verstellrichtung |
| 14 | Anschlagvorrichtung | 44 | Hindernis |
| 15 | Anschlagfinger | 45 | Bilderfassungsvorrichtung |
| 16 | Maschineninnenraum | 46 | Überwachungsbereich |
| 17 | Anschlagposition | 47 | Beleuchtungsvorrichtung |
| 18 | Werkstückzufuhrseite | 48 | Lichtbündel |
| 19 | Anschlagfläche | 49 | Objektoberfläche |
| 20 | Verstellachse | 50 | Lichtabbildung |
| 21 | Verstellachse | 51 | Sicherheitssteuerung |
| 22 | Verstellachse | 52 | Linienlaser |
| 23 | Steuerungsvorrichtung | 53 | Strahlengang |
| 24 | Biegeebene | 54 | Lichtebene |
| 25 | Anschlagfläche | 55 | Lichtbündelquerachse |
| 26 | Auflagefläche | 56 | Lichtschnittsensoranordnung |
| 27 | Antriebsanordnung | 57 | Erfassungsbereich |
| 28 | Aktuator | 58 | Bildauswertevorrichtung |
| 29 | Zahnritzel | 59 | Breitenerstreckung |
| 30 | Zahnstangenanordnung | 60 | Horizontalerstreckung |
| 61 | Lichtabbildung | | |
| 62 | Lichtstreifen | | |
| 63 | Oberfläche | | |
| 64 | Lichtbündel | | |

## Patentansprüche

1. Verfahren zum Betrieb einer Biegepresse (1), umfassend
automatisiert gesteuertes Verstellen eines Anschlagfingers (15) einer Anschlagvorrichtung (14) entlang zumindest einer ersten, horizontalen Verstellachse (20) in Richtung einer durch ein unteres Biegewerkzeug (8) und ein relativ dazu verstellbares, oberes Biegewerkzeug (9) definierten, vertikalen Biegeebene (24), in eine zum Positionieren eines Werkstücks (2) vorgesehene Anschlagposition (17), wobei der Anschlagfinger (15) eine der Biegeebene (24) nächstliegende, vorderste Anschlagfläche (19) zum Positionieren eines Werkstücks (2) für eine Biegeumformung aufweist,
**dadurch gekennzeichnet, dass**
zumindest während einer automatisiert gesteuerten Verstellbewegung des Anschlagfingers (15) entlang der ersten Verstellachse (20) in die Anschlagposition (17) mittels einer, entlang aller für den Anschlagfinger (15) vorgesehenen, horizontalen Verstellachsen (20, 21) mit dem Anschlagfinger (15) bewegungsgekoppelt an der Anschlagsvorrichtung (14) angeordneten Bilderfassungsvorrichtung (45), ein in Verstellrichtung (43) dem Anschlagfinger (15) horizontal vorauseilender Überwachungsbereich (46) zwischen der vordersten Anschlagfläche (19) und der Biegeebene (24) hinsichtlich Hindernisse (44) überwacht wird,
wobei zur Erfassung von Hindernissen während der Verstellbewegung in die Anschlagposition (17) mittels einer, entlang aller für den Anschlagfinger (15) vorgesehenen, horizontalen Verstellachsen (20, 21) mit dem Anschlagfinger (15) bewegungsgekoppelt und von der Bilderfassungsvorrichtung (45) beabstandet an der Anschlagsvorrichtung (14) angeordneten Beleuchtungsvorrichtung (47), ein erstes Lichtbündel (48) in den der Anschlagfläche (19) vorauseilenden Überwachungsbereich (46) gestrahlt wird,
und dass bei Erfassung eines Hindernisses während der Verstellbewegung des Anschlagfingers (15) entlang der ersten Verstellachse (20) in die Anschlagposition (17) automatisiert gesteuert eine Sicherheitsmaßnahme durchgeführt wird.

2. Verfahren nach Anspruch 1, **dadurch gekennzeichnet, dass** das erste Lichtbündel (48) mittels einer, entlang aller für den Anschlagfinger (15) vorgesehenen Verstellachsen (20, 21, 22) mit dem Anschlagfinger (15) bewegungsgekoppelt an der Anschlagsvorrichtung (14) angeordneten Beleuchtungsvorrichtung (47) in den der Anschlagfläche (19) vorauseilenden Überwachungsbereich (46) gestrahlt wird.

3. Verfahren nach Anspruch 1 oder 2, **dadurch gekennzeichnet, dass** der in Verstellrichtung (43) dem Anschlagfinger (15) horizontal vorauseilende Überwachungsbereich (46) mittels einer, entlang aller für den Anschlagfinger (15) vorgesehenen Verstellachsen (20, 21, 22) mit dem Anschlagfinger (15) bewegungsgekoppelt an der Anschlagsvorrichtung (14) angeordneten Bilderfassungsvorrichtung (45) überwacht wird.

4. Verfahren nach einem der vorhergehenden Ansprüche, **dadurch gekennzeichnet, dass** bei einer Erfassung einer durch das erste Lichtbündel (48) auf einer Objektoberfläche (49) eines Hindernisses (44) projizierten, ersten Lichtabbildung (50) die Sicherheitsmaßnahme durchgeführt wird, wobei die Beleuchtungsvorrichtung (47) und die Bilderfassungsvorrichtung (45) derart an der Anschlagvorrichtung (14) ausgerichtet angeordnet werden, dass bei ordnungsgemäßen Betriebszuständen zumindest während der Verstellbewegung des Anschlagfingers (15) in die Anschlagsposition (17) durch das erste Lichtbündel (48) keine erste Lichtabbildung (50) auf eine Oberfläche einer Komponente der Biegepresse (1) projiziert wird oder keine erste Lichtabbildung (50) auf einer Oberfläche einer Komponente der Biegepresse (1) durch die Bilderfassungsvorrichtung (45) erfassbar ist.

5. Verfahren nach einem der vorergehenden Ansprüche, **dadurch gekennzeichnet, dass** während der Verstellbewegung des Anschlagfingers (15) in die Anschlagposition (17) erfasste Bilddaten fortwährend mit hinterlegten Referenzdaten, welche einen Verlauf von Bilddaten bei ordnungsgemäßen Betriebszuständen während der Verstellbewegung in die Anschlagsposition (17) kennzeichnen, abgeglichen werden, und dass bei einer Erfassung einer verlaufstechnisch atypisch auftretenden, ersten Lichtabbildung (50) auf einer Objektoberfläche (49) eines Hindernisses (44) die Sicherheitsmaßnahme durchgeführt wird.

6. Verfahren nach einem der vorhergehenden Ansprüche, **dadurch gekennzeichnet, dass** das erste Lichtbündel (48) als divergentes oder weitestgehend paralleles Lichtbündel (48), dessen Strahlengang (53) eine erste Lichtebene (54) bildet, in den der vordersten Anschlagfläche (19) horizontal vorauseilenden Überwachungsbereich (46) gestrahlt wird, wobei eine normal zum Strahlengang (53) verlaufende Lichtbündelquerachse (55) der ersten Lichtebene (54) zumindest weitestgehend parallel zu der vordersten Anschlagfläche (19) des Anschlagfingers (15) ausgerichtet wird.

7. Verfahren nach Anspruch 6, **dadurch gekennzeichnet, dass** während der Verstellbewegung des Anschlagfingers (15) in die Anschlagposition (17) erfasste Bilddaten mittels einer Bildauswertungsvorrichtung (58) hinsichtlich einer abbildungstechnisch erfassten Geometrie einer ersten Lichtabbildung (50) ausgewertet werden, und dass bei Erfassung einer nichtlinearen, ersten Lichtabbildung (50), insbesondere bei Detektion einer gekrümmten, ersten Lichtabbildung (50) die Sicherheitsmaßnahme durchgeführt wird.

8. Verfahren nach Anspruch 6 oder 7, **dadurch gekennzeichnet, dass** das erste Lichtbündel (48) derart in den der vordersten Anschlagfläche (19) horizontal vorauseilenden Überwachungsbereich (46) gestrahlt wird, dass eine parallel zur Lichtbündelquerachse (55) verlaufende Breitenerstreckung (59) der ersten Lichtebene (54) in dem Überwachungsbereich (46) größer gewählt wird als eine Horizontalerstreckung (60) der vordersten Anschlagfläche (19) des Anschlagfingers (15).

9. Verfahren nach einem der vorherhergehenden Ansprüche, **dadurch gekennzeichnet, dass** mittels der Beleuchtungsvorrichtung (47) zumindest während der Verstellbewegung in die Anschlagposition (17) permanent eine zweite Lichtabbildung (61), insbesondere ein zumindest vorwiegend parallel zu der vordersten Anschlagfläche (19) ausgerichteter Lichtstreifen (62) auf eine mittels der Bilderfassungsvorrichtung (45) erfassbare Oberfläche (63) des Anschlagfingers (15), projiziert wird.

10. Verfahren nach einem der vorhergehenden Ansprüche, **dadurch gekennzeichnet, dass** das erste Lichtbündel (48) und/oder die Überwachung bei Erreichen einer steuerungstechnisch vorgegebenen Anschlagposition (19) umgehend deaktiviert wird oder werden.

11. Verfahren nach einem der vorhergehenden Ansprüche, **dadurch gekennzeichnet, dass** das erste Lichtbündel (48) und/oder die Überwachung bei einem steuerungstechnisch vorgegebenen Stillstand des Anschlagfingers (15) deaktiviert wird oder werden.

12. Verfahren nach einem der vorhergehenden Ansprüche, **dadurch gekennzeichnet, dass** das erste Lichtbündel (48) und/oder die Überwachung bei einem automatisiert gesteuerten Start der Verstellbewegung des Anschlagfingers (15) in die Anschlagposition (17) umgehend aktiviert wird oder werden.

13. Biegepresse (1), umfassend
ein unteres Biegewerkzeug (8) und ein relativ dazu verstellbares, oberes Biegewerkzeug (9), durch welche Biegewerkzeuge (8, 9) eine vertikale Biegeebene (24) für Biegeumformungen von Werkstücken (2) definiert ist,
eine Anschlagvorrichtung (14) mit einem entlang zumindest einer ersten, horizontalen Verstellachse (20) in Richtung der Biegeebene (24) in eine Anschlagposition (17) verstellbaren Anschlagfinger (15), welcher Anschlagfinger (15) wenigstens eine zum Positionieren eines zu bearbeitenden Werkstücks in einer Anschlagposition (17) vorgesehene, der Biegeebene (24) nächstliegende, vorderste Anschlagfläche (19) aufweist,
wobei die Anschlagvorrichtung (14) zumindest eine mit einer Steuerungsvorrichtung (23) signalverbundene Antriebsanordnung (27) zur automatisierten Steuerung von Verstellbewegungen des Anschlagfingers (15) umfasst,
**dadurch gekennzeichnet, dass**
an der Anschlagvorrichtung (14) eine entlang aller für den Anschlagfinger (15) vorgesehenen, horizontalen Verstellachsen (20, 21) bewegungsgekoppelt mit dem Anschlagfinger (15) verstellbare Bilderfassungsvorrichtung (45) angeordnet ist, welche Bilderfassungsvorrichtung (45) zumindest zur Überwachung eines, während einer Verstellbewegung des Anschlagfingers (15) entlang der ersten Verstellachse (20) in die Anschlagposition (17), der vordersten Anschlagfläche (19) horizontal vorauseilenden Überwachungsbereich (46) zwischen der vordersten Anschlagfläche (19) und der Biegeebene (24) ausgerichtet ist,
und dass beabstandet von der Bilderfassungsvorrichtung (45) an der Anschlagvorrichtung (14) eine entlang aller für den Anschlagfinger (15) vorgesehenen, horizontalen Verstellachsen (20, 21) mit dem Anschlagfinger (15) bewegungsgekoppelt verstellbare Beleuchtungsvorrichtung (47) angeordnet ist, welche Beleuchtungsvorrichtung (47) zur Abstrahlung eines ersten Lichtbündels (48) in den, während der Verstellbewegung die Anschlagposition (17), der vordersten Anschlagfläche (19) horizontal vorauseilenden Überwachungsbereich (46) ausgerichtet ist,
wobei die Beleuchtungsvorrichtung (47) und die Bilderfassungsvorrichtung (45) mit der Steuerungsvorrichtung (23) oder einer Sicherheitssteuerung (51) signalverbunden sind,
und wobei die Steuerungsvorrichtung (23) oder die Sicherheitssteuerung (51) bei Erfassung eines Hindernisses während der Verstellbewegung des Anschlagfingers (15) entlang der ersten Verstellachse (20) in die Anschlagposition (17), zur Durchführung einer Sicherheitsmaßnahme ausgebildet ist.

14. Biegepresse nach Anspruch 13, **dadurch gekennzeichnet, dass** die Beleuchtungsvorrichtung (47) entlang aller für den Anschlagfinger (15) vorgesehenen Verstellachsen (20, 21, 22) mit dem Anschlagfinger (15) bewegungsgekoppelt verstellbar an der Anschlagvorrichtung (14) angeordnet ist.

15. Biegepresse nach einem der Ansprüche 13 oder 14, **dadurch gekennzeichnet, dass** die Bilderfassungsvorrichtung (45) entlang aller für den Anschlagfinger (15) vorgesehenen Verstellachsen (20, 21, 22) mit dem Anschlagfinger (15) bewegungsgekoppelt verstellbar an der Anschlagvorrichtung (14) angeordnet ist.

16. Biegepresse nach einem der Ansprüche 13 bis 15, **dadurch gekennzeichnet, dass** die Beleuchtungsvorrichtung (47) und die Bilderfassungsvorrichtung (45) derart an der Anschlagvorrichtung (14) ausgerichtet angeordnet sind, dass bei ordnungsgemäßen Betriebszuständen zumindest während der Verstellbewegung des Anschlagfingers (15) in die Anschlagsposition (17) durch das erste Lichtbündel (48) keine erste Lichtabbildung (50) auf eine Oberfläche einer Komponente der Biegepresse (1) projiziert wird oder keine erste Lichtabbildung (50) einer Oberfläche einer Komponente der Biegepresse (1) durch die Bilderfassungsvorrichtung (47) erfassbar ist.

17. Biegepresse nach einem der Ansprüche 13 bis 16, **dadurch gekennzeichnet, dass** die Beleuchtungsvorrichtung (47) einen Linienlaser (52) umfasst, welcher derart an der Anschlagvorrichtung (14) angeordnet ist, dass ein divergentes oder weitestgehend paralleles, erstes Lichtbündel (48), dessen Strahlengang (53) eine erste Lichtebene (54) bildet, in den, während der Verstellbewegung entlang der ersten Verstellachse (20) in die Anschlagposition (17), der vordersten Anschlagfläche (19) horizontal vorauseilenden Überwachungsbereich (46) strahlbar ist, wobei eine normal zum Strahlengang (53) verlaufende Lichtbündelquerachse (55) der ersten Lichtebene (54) zumindest weitestgehend parallel zu der vordersten Anschlagfläche (19) des Anschlagfingers (15) ausgerichtet ist.

18. Biegepresse nach Anspruch 17, **dadurch gekennzeichnet, dass** der Linienlaser (52) und die Bilderfassungsvorrichtung (45) eine Lichtschnittsensoranordnung (56) bilden.

19. Biegepresse nach Anspruch 17 oder 18, **dadurch gekennzeichnet, dass** der Linienlaser (52) derart konfiguriert und angeordnet ist, dass eine parallel zu der Lichtbündelquerachse (55) verlaufende Breitenerstreckung (59) der ersten Lichtebene (54) des ersten Lichtbündels (48) in dem Überwachungsbereich (46) größer ist als eine Horizontalerstreckung (60) der vordersten Anschlagfläche (19) des Anschlagfingers (15).

20. Biegepresse nach einem der Ansprüche 17 bis 19, **dadurch gekennzeichnet, dass** der Linienlaser (52) zur Projektion eines parallel zu der vordersten Anschlagfläche (19) des Anschlagfingers (15) verlaufenden, Lichtstreifens (62) auf eine Oberfläche (63) des Anschlagfingers (15) konfiguriert und angeordnet ist.

## Claims

1. A method for operating a bending press (1), comprising
automatically controlled adjustment of a stop finger (15) of a stop device (14) along at least one first, horizontal adjustment axis (20) in the direction of a vertical bending plane (24) defined by a lower bending tool (8) and an upper bending tool (9) adjustable relative thereto, into a stop position (17) intended for positioning a workpiece (2), wherein the stop finger (15) comprises a foremost stop surface (19) nearest to the bending plane (24) for positioning a workpiece (2) for bend-forming,
**characterized in that**
at least during an automatically controlled adjusting movement of the stop finger (15) along the first adjustment axis (20) into the stop position (17), an observation region (46) located horizontally ahead of the stop finger (15) in the adjustment direction (43) between the foremost stop surface (19) and the bending plane (24) is monitored for obstacles (44) by means of an image detecting device (45) arranged on the stop device (14) so as to be motion-coupled to the stop finger (15) along all horizontal adjustment axes (20, 21) provided for the stop finger (15),
wherein for detecting obstacles during the adjusting movement in the stop position (17), a first light beam (48) is radiated into the observation region (46) located ahead of the stop surface (19) by means of a lighting device (47) arranged on the stop device (14) at a distance from the image detecting device (45) so as to be motion-coupled to the stop finger (15) along all horizontal adjustment axes (20, 21) provided for the stop finger (15),
and that when an obstacle is detected during the adjusting movement of the stop finger (15) along the first adjustment axis (20) into the stop position (17) a safety measure is carried out in an automatically controlled manner.

2. The method according to claim 1, **characterized in that** the first light beam (48) is radiated into the observation region (46) located ahead of the stop surface (19) by means of a lighting device (47) arranged on the stop device (14) so as to be motion-coupled to the stop finger (15) along all adjustment axes (20, 21, 22) provided for the stop finger (15).

3. The method according to claim 1 or 2, **characterized in that** the observation region (46) located horizontally ahead of the stop finger (15) in the adjustment direction (43) is monitored by means of an image detecting device (45) arranged on the stop device (14) so as to be motion-coupled to the stop finger (15) along all horizontal adjustment axes (20, 21, 22) provided for the stop finger (15).

4. The method according to one of the preceding claims, **characterized in that** when a first light image (50) projected by the first light beam (48) onto an object surface (49) of an obstacle (44) is detected, the safety measure is carried out, wherein the lightning device (47) and the image detecting device (45) are arranged in alignment with the stop device (14) such that, under correct operating conditions, at least during the adjusting movement of the stop finger (15) into the stop position (17), no first light image (50) is projected by the first light beam (48) onto a surface of a component of the bending press (1) or no first light image (50) on a surface of a component of the bending press (1) can be detected by the image detecting device (45).

5. The method according to one of the preceding claims, **characterized in that** image data detected during the adjusting movement of the stop finger (15) into the stop position (17) is continuously compared to stored reference data, which characterizes a course of image data in the case of correct operating states during the adjusting movement into the stop position (17), and that the safety measure is carried out when a first light image (50), which occurs atypically in terms of the course, is detected on an object surface (49) of an obstacle (44).

6. The method according to one of the preceding claims, **characterized in that** the first light beam (48) is radiated into the observation region (46) located horizontally ahead of the foremost stop surface (19) as a divergent or substantially parallel light beam (48) whose beam path (53) forms a first light plane (54), wherein a light beam transverse axis (55) of the first light plane (54) extending perpendicular to the beam path (53) is oriented at least substantially in parallel to the foremost stop surface (19) of the stop finger (15).

7. The method according to claim 6, **characterized in that** image data captured during the adjusting movement of the stop finger (15) into the stop position (17) is evaluated by means of an image evaluation device (58) with respect to a geometry of a first light image (50) acquired by imaging, and that the safety measure is carried out when a non-linear first light image (50) is captured, in particular when a curved first light image (50) is detected.

8. The method according to claim 6 or 7, **characterized in that** the first light beam (48) is radiated into the observation region (46) located horizontally ahead of the foremost stop surface (19) such that a width extent (59) of the first light plane (54) extending in parallel to the light beam transverse axis (55) is selected to be greater in the observation region (46) than a horizontal extent (60) of the foremost stop surface (19) of the stop finger (15).

9. The method according to one of the preceding claims, **characterized in that** at least during the adjusting movement into the stop position (17), a second light image (61), in particular a light strip (62) oriented at least predominantly in parallel to the foremost stop surface (19), is permanently projected by means of the lightning device (47) onto a surface (63) of the stop finger (15) which can be detected by means of the image detecting device (45).

10. The method according to one of the preceding claims, **characterized in that** the first light beam (48) and/or the observation is or are immediately deactivated when a stop position (19) predetermined by a controller is reached.

11. The method according to one of the preceding claims, **characterized in that** the first light beam (48) and/or the observation is or are deactivated when the stop finger (15) stands still as predetermined by a controller.

12. The method according to one of the preceding claims, **characterized in that** the first light beam (48) and/or the observation is or are immediately activated when the adjusting movement of the stop finger (15) into the stop position (17) is started in an automatically controlled manner.

13. A bending press (1), comprising
an upper bending tool (8) an a lower bending tool (9) adjustable relative thereto, by means of which bending tools (8, 9) a vertical bending plane (24) for bend-forming of workpieces (2) is defined,
a stop device (14) with a stop finger (15) adjustable into a stop position (17) along at least one first, horizontal adjustment axis (20) in the direction of the bending plane (24), said stop finger (15) comprising at least one foremost stop surface (19) nearest to the bending plane (24) intended for positioning a workpiece to be processes in a stop position (17),
wherein the stop device (14) comprises at least one driving arrangement (27) signal-connected to a controller (23) for the automated control of adjusting movements of the stop finger (15),
**characterized in that**
an image detecting device (45) adjustable in a motion-coupled manner with the stop finger (15) along all horizontal adjustment axes (20, 21) provided for the stop finger (15) is arranged on the stop device (14), which image detecting device (45) is aligned/arranged at least for monitoring an observation region (46), located horizontally ahead of the foremost stop surface (19), between the foremost stop surface (19) and the bending plane (24) during an adjusting movement of the stop finger (15) along the first adjustment axis (20) into the stop position (17),
and that a lighting device (47) adjustable in a motion-coupled manner with the stop finger (15) along all the horizontal adjustment axes (20, 21) provided for the stop finger (15), is arranged on the stop device (14) at a distance from the image detecting device (45), which lighting device (47) is aligned/arranged to emit a first light beam (48) into the observation region (46) located horizontally ahead of the foremost stop surface (19) during the adjusting movement into the stop position (17),
wherein the lighting device (47) and the image detecting device (45) are signal-connected to the controller (23) or to a safety controller (51),
and wherein the controller (23) or the safety controller (51) is designed to perform a safety measure when an obstacle is detected during the adjusting movement of the stop finger (15) along the first adjustment axis (20) into the stop position (17).

14. The bending press according to claim 13, **characterized in that** the lighting device (47) is arranged on the stop device (14) so as to be adjustable in a motion-coupled manner with the stop finger (15) along all adjustment axes (20, 21, 22) intended for the stop finger (15).

15. The bending press according to one of claims 13 or 14, **characterized in that** the image detecting device (45) is arranged on the stop device (14) so as to be adjustable in a motion-coupled manner with the stop finger (15) along all adjustment axes (20, 21, 22) intended for the stop finger (15).

16. The bending press according to one of claims 13 to 15, **characterized in that** the lightning device (47) and the image detecting device (45) are arranged in alignment with the stop device (14) such that, under correct operating conditions, at least during the adjusting movement of the stop finger (15) into the stop position (17), no first light image (50) is projected by the first light beam (48) onto a surface of a component of the bending press (1) or no first light image (50) on a surface of a component of the bending press (1) can be detected by the image detecting device (47).

17. The bending press according to one of claims 13 to 16, **characterized in that** the lighting device (47) comprises a line laser (52), which is arranged such on the stop device (14) that a divergent or substantially parallel first light beam (48) whose beam path (53) forms a first light plane (54) can be radiated into the observation region (46) located horizontally ahead of the foremost stop surface (19) during the adjusting movement into the stop position (17) along the first adjustment axis (20), wherein a light beam transverse axis (55) of the first light plane (54) extending perpendicular to the beam path (53) is oriented at least substantially in parallel to the foremost stop surface (19) of the stop finger (15).

18. The bending press according to claim 17, **characterized in that** the line laser (52) and the image detecting device (45) form a light-section sensor arrangement (56).

19. The bending press according to claim 17 or 18, **characterized in that** the line laser (52) is configured and arranged such that a width extent (59) of the first light plane (54) of the first light beam (48) extending in parallel to the light beam transverse axis (55) is greater in the observation region (46) than a horizontal extent (60) of the foremost stop surface (19) of the stop finger (15).

20. The bending press according to one of claims 17 to 19, **characterized in that** the line laser (52) is configured and arranged for projecting a light strip (62), which extends in parallel to the foremost stop surface (19) of the stop finger (15), onto a surface (63) of the stop finger (15).

## Revendications

1. Procédé pour la commande d'une presse plieuse (1) comprenant
le déplacement contrôlé de manière automatisée d'un taquet de butée (15) d'un dispositif de butée (14) le long d'un premier axe de déplacement horizontal (20) en direction d'un plan de pliage vertical (24) définie par un outil de pliage inférieur (8) et par un outil de pliage supérieur (9) mobile par rapport à celui-ci, vers une position de butée (17) prévue pour le positionnement d'une pièce (2), le taquet de butée (15) comprenant une surface de butée (19) la plus en avant et la plus proche du pan de pliage (24), pour le positionnement d'une pièce (2) pour un formage par pliage,
**caractérisé en ce que**
au moins pendant un déplacement contrôlé de manière automatisée du taquet de butée (15) le long du premier axe de déplacement (20) vers la position de butée (17), au moyen d'un dispositif d'acquisition d'images (45) disposé, de manière couplée en mouvement avec le taquet de butée (15) le long de tous les axes de déplacement horizontaux (20, 21) prévus pour le taquet de butée (15), sur le dispositif de butée (14), une zone de surveillance (46), en avance horizontalement dans la direction de déplacement (43) par rapport au taquet de butée (15), est surveillée, entre la surface de butée (19) la plus en avant et le plan de pliage (24), en ce qui concerne les obstacles (44),
moyennant quoi, pour la détection d'obstacles, pendant le déplacement vers la position de butée (17), au moyen d'un dispositif d'éclairage (47), disposé de manière couplée en mouvement avec le taquet de butée (15) le long de tous les axes de déplacement horizontaux (20, 21) prévus pour le taquet de butée (15) et à distance du dispositif d'acquisition d'images (45) sur le dispositif de butée (14), un premier faisceau lumineux (48) est émis dans la zone de surveillance (46) en avant de la surface de butée (19),
et **en ce que**, lors de la détection d'un obstacle pendant le déplacement du taquet de butée (15) le long du premier axe de déplacement (20) vers la position de butée (17) une mesure de sécurité est appliquée de manière contrôlée et automatisée.

2. Procédé selon la revendication 1, **caractérisé en ce que** le premier faisceau lumineux (48) est émis au moyen d'un dispositif d'éclairage (47), disposé de manière couplér en mouvement avec le taquet de butée (15) le long de tous les axes de déplacement (20, 21, 22) prévus pour le taquet de butée (15), sur le dispositif de butée (14), vers la zone de surveillance (46) en avant de la surface de butée (19).

3. Procédé selon la revendication 1 ou 2, **caractérisé en ce que** la zone de surveillance (46), en avant horizontalement du taquet de butée (15) dans la direction de déplacement (43), est surveillée au moyen d'un dispositif d'acquisition d'images (45) disposé, de manière couplée en mouvement avec le taquet de butée (15) le long de tous les axes de déplacement (20, 21, 22) prévus pour le taquet de butée (15), sur le dispositif de butée (14).

4. Procédé selon l'une des revendications précédentes, **caractérisé en ce que**, lors d'une acquisition d'une première forme lumineuse (50) projetée par le premier faisceau lumineux (48) sur une surface d'objet (49) d'un obstacle (44), la mesure de sécurité est appliquée, le dispositif d'éclairage (47) et le dispositif d'acquisition d'images (45) étant disposés de manière orientée sur le dispositif de butée (14) de façon à ce que, dans le cas d'états de fonctionnement corrects, au moins pendant le déplacement du taquet de butée (15) vers la position de butée (17), le premier faisceau lumineux (48) ne projette pas de première forme lumineuse (50) sur une surface d'un composant de la presse plieuse (1) ou bien aucune forme lumineuse (50) ne peut être détectée sur une surface d'un composant de la presse plieuse (1) par le dispositif d'acquisition d'images (45).

5. Procédé selon l'une des revendications précédentes, **caractérisé en ce que** les données d'images acquises pendant le déplacement du taquet de butée (15) vers la position de butée (17) sont comparées de manière continue avec des données de référence enregistrées, qui caractérisent un tracé de données d'images dans le cas d'états de fonctionnement corrects pendant le déplacement vers la position de butée (17) et **en ce que**, lors de l'acquisition d'une première forme lumineuse (50), apparaissant de manière atypique sur le tracé, sur une surface d'objet (49) d'un obstacle (44), la mesure de sécurité est appliquée.

6. Procédé selon l'une des revendications précédentes, **caractérisé en ce que** le premier faisceau lumineux (48) est émis, sous la forme d'un faisceau lumineux (48) divergent ou largement parallèle, dont le trajet des rayons (53) constitue un premier plan lumineux (54), vers la zone de surveillance (46) en avance horizontalement par rapport à la surface de butée la plus en avant (19), un axe transversal de faisceau lumineux (55), s'étendant de manière normale par rapport au trajet des rayons (53), du premier plan lumineux (54) étant orienté de manière au moins largement parallèle à la surface de butée la plus en avant (19) du taquet de butée (15).

7. Procédé selon la revendication 6, **caractérisé en ce que** les données d'images acquises pendant le déplacement du taquet de butée (15) vers la position de butée (17) sont analysées au moyen d'un dispositif d'analyse d'images (58) en ce qui concerne une géométrie déterminée par représentation d'une première forme lumineuse (50) et **en ce que**, lors de la détection d'une première forme lumineuse (50) non linéaire, plus particulièrement lors de la détection d'une première forme lumineuse (50) incurvée, la mesure de sécurité est appliquée.

8. Procédé selon la revendication 6 ou 7, **caractérisé en ce que** le premier faisceau lumineux (48) est émis vers la zone de surveillance (46) en avance horizontalement par rapport à la surface de butée la plus en avant (19) de façon à ce qu'une extension en largeur (59), s'étendant dans la zone de surveillance (46) parallèlement à l'axe transversal de faisceau lumineux (55), du premier plan lumineux (54), est choisie de façon à être supérieure à une extension horizontale (60) de la surface de butée la plus en avant (19) du taquet de butée (15).

9. Procédé selon l'une des revendications précédentes, **caractérisé en ce que**, au moyen du dispositif d'éclairage (47), au moins pendant le déplacement vers la position de butée (17), une deuxième forme lumineuse (61), plus particulièrement une bande lumineuse (62) orientée essentiellement parallèlement à la surface de butée la plus en avant (19), est projetée en permanence sur une surface (63) du taquet de butée (15) pouvant être acquise au moyen du dispositif d'acquisition d'images (45).

10. Procédé selon l'une des revendications précédentes, **caractérisé en ce que** le premier faisceau lumineux (48) et/ou la surveillance est/sont immédiatement désactivé(s) lorsqu'une position de butée (19) prédéterminée est atteinte par la commande.

11. Procédé selon l'une des revendications précédentes, **caractérisé en ce que** le premier faisceau lumineux (48) et/ou la surveillance est/sont désactivé(s) lors d'un arrêt prédéterminé du taquet de butée (15) par la commande.

12. Procédé selon l'une des revendications précédentes, **caractérisé en ce que** le premier faisceau lumineux (48) et/ou la surveillance est/sont immédiatement activé(s) lors d'un démarrage contrôlé de manière automatisée du taquet de butée (15) vers la position de butée (17).

13. Presse plieuse (1) comprenant
un outil de pliage inférieur (8) et un outil de pliage supérieur (9) mobile par rapport à celui-ci, des outils de pliage (8, 9) définissant un plan de pliage vertical (24) pour le formage par pliage de pièce (2),
un dispositif de butée (14) avec un taquet de butée (15) pouvant être déplacé le long d'au moins un premier axe de déplacement horizontal (20) en direction du plan de pliage (24) vers une position de butée (17), ce taquet de butée (15) comprenant au moins une surface de butée avant (19) proche du plan de pliage (24), prévue pour le positionnement d'une pièce à usiner dans une position de butée (17),
le dispositif de butée (14) comprenant au moins une configuration d'entraînement (27) reliée à l'aide de signaux avec un dispositif de commande (23), pour le contrôle automatisé des déplacements du taquet de butée (15),
**caractérisée en ce que**
dans le dispositif de butée (14), est disposé un dispositif d'acquisition d'images (45) mobile de manière couplée en mouvement avec le taquet de butée (15) le long de tous les axes de déplacement horizontaux (20, 21) prévus pour le taquet de butée (15), ce dispositif d'acquisition d'images (45) étant orienté, au moins pour la surveillance d'une zone de surveillance (46), entre la surface de butée la plus en avant (19) et le plan de pliage (24), en avance horizontalement par rapport à la surface de butée la plus en avant (19), pendant un déplacement du taquet de butée (15) le long du premier axe de déplacement (20) vers la position de butée (17),
et **en ce que**, à une certaine distance du dispositif d'acquisition d'images (45), sur le dispositif de butée (14), est disposé un dispositif d'éclairage (47) mobile e manière couplée en mouvement avec le taquet de butée (15) le long de tous les axes de déplacements horizontaux (20, 21) prévus pour le taquet de butée (15), ce dispositif d'éclairage (47) étant orienté, pour l'émission d'un premier faisceau lumineux (48) sur la zone de surveillance (46) en avance horizontalement par rapport à la surface de butée la plus en avant (19) pendant le déplacement vers la position de butée (17),
le dispositif d'éclairage (47) et le dispositif d'acquisition d'images (45) étant reliés par l'intermédiaire de signaux avec le dispositif de commande (23) ou une commande de sécurité (51),
et le dispositif de commande (23) ou la commande de sécurité (51) est conçu pour l'application d'une mesure de sécurité lors de la détection d'un obstacle pendant le déplacement du taquet de butée (15) le long du premier axe de déplacement (20) vers la position de butée (17).

14. Presse plieuse selon la revendication 13, **caractérisée en ce que** le dispositif d'éclairage (47) est disposé sur le dispositif de butée (14) de manière mobile et couplée en mouvement avec le taquet de butée (15) le long de tous les axes de déplacement (20, 21,22) prévus pour le taquet de butée (15).

15. Presse plieuse selon l'une des revendications 13 ou 14, **caractérisée en ce que** le dispositif d'acquisition d'images (45) est disposé sur le dispositif de butée (14) de manière mobile et couplée en mouvement avec le taquet de butée (15) le long de tous les axes de déplacement (20, 21,22) prévus pour le taquet de butée (15).

16. Presse plieuse selon l'une des revendications 13 à 15, **caractérisée en ce que** le dispositif d'éclairage (47) et le dispositif d'acquisition d'images (45) sont disposés sur le dispositif de butée (14) de manière orientée de façon à ce que, dans le cas d'états de fonctionnement corrects, au moins pendant le déplacement du taquet de butée (15) vers la position de butée (17), le premier faisceau lumineux (48) ne projette pas de première forme lumineuse (50) sur une surface d'un composant de la presse plieuse (1) ou bien aucune forme lumineuse (50) d'une surface d'un composant de la presse plieuse (1) ne peut être acquise par le dispositif d'acquisition d'images (47).

17. Presse plieuse selon l'une des revendications 13 à 16, **caractérisée en ce que** le dispositif d'éclairage (47) comprend un laser linéaire (52) qui est disposé dans le dispositif de butée (14) de façon à ce qu'un premier faisceau lumineux (48) divergent ou largement parallèle, dont le trajet des rayons (53) forme un premier plan lumineux (54), peut être émis sur la zone de surveillance (46) en avance horizontalement par rapport à la surface de butée la plus en avant (19) pendant le déplacement le long du premier axe de déplacement (20) vers la position de butée (17), un axe transversal de faisceau lumineux (55), s'étendant de manière normale par rapport au trajet des rayons (53), du premier plan lumineux (54) étant orienté au moins largement parallèlement à la surface de butée la plus en avant (19) du taquet de butée (15).

18. Presse plieuse selon la revendication 17, **caractérisée en ce que** le laser linéaire (52) et le dispositif d'acquisition d'images (45) constituent une configuration de capteurs de coupe optique (56).

19. Presse plieuse selon la revendication 17 ou 18, **caractérisée en ce que** le laser linéaire (52) est configuré et disposé de façon à ce qu'une extension en largeur (59), s'étendant parallèlement à l'axe transversal du faisceau lumineux (55), du premier plan lumineux (54) du premier faisceau lumineux (48), dans la zone de surveillance (46), soit supérieure à une extension horizontale (60) de la surface de butée la plus en avant (19) du taquet de butée (15).

20. Presse plieuse selon l'une des revendications 17 à 19, **caractérisée en ce que** le laser linéaire (52) est configuré et disposé pour la projection d'une bande lumineuse (62) s'étendant parallèlement à la surface de butée la plus en avant (19) du taquet de butée (15) sur une surface (63) du taquet de butée (15).
